(19) **Europäisches Patentamt / European Patent Office / Office européen des brevets**

(11) **EP 4 773 653 A1**

(12) **EUROPEAN PATENT APPLICATION**
published in accordance with Art. 153(4) EPC

(43) Date of publication:
**08.07.2026 Bulletin 2026/28**

(21) Application number: **23951182.7**

(22) Date of filing: **07.09.2023**

(51) International Patent Classification (IPC):
***H04W 24/02*** (2009.01)

(52) Cooperative Patent Classification (CPC):
**H04W 24/02**

(86) International application number:
**PCT/CN2023/117533**

(87) International publication number:
**WO 2025/050359 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **HUAWEI TECHNOLOGIES CO., LTD.**
**Shenzhen 518129 (CN)**

(72) Inventors:
- **QIAO, Yunfei**
 **Shenzhen, Guangdong 518129 (CN)**
- **WANG, Jian**
 **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **MODEL INDICATION METHOD, MODEL GENERATION METHOD AND RELATED APPARATUS**

(57) This application provides a model indication method, a model generation method, and a related apparatus, so that a first apparatus obtains a user-level model, or a second apparatus deploys the user-level model for the first apparatus. Therefore, the first apparatus executes a first task based on the user-level model. The method in embodiments of this application includes: A first apparatus sends feature information to a second apparatus, where the feature information represents a feature of a first task; and the first apparatus receives first information from the second apparatus, where the first information indicates a user-level model, the user-level model is determined based on the feature information and a public model of each level that is in the second apparatus and that is related to the first task, and the user-level model is used by the first apparatus to execute the first task.

FIG. 3

**Description**

**TECHNICAL FIELD**

This application relates to the field of communication technologies, and in particular, to a model indication method, a model generation method, and a related apparatus.

**BACKGROUND**

To achieve future inclusive intelligence, intelligence further evolves at a wireless network architecture level, and artificial intelligence (artificial intelligence, AI) is further integrated with wireless networks, to implement native network intelligence and intelligence of terminal devices. For example, terminal types are diversified, and terminal device connections are more flexible and intelligent. The terminal devices have specific AI capabilities. In addition to providing conventional communication connection services, the networks may further provide computing and AI services, to better support inclusive, real-time, and highly secure AI services.

The terminal devices may execute corresponding tasks by using models. Therefore, how the terminal devices obtain, from the networks, the models used to execute the tasks is a problem worth considering.

**SUMMARY**

This application provides a model indication method, a model generation method, and a related apparatus, so that a first apparatus obtains a user-level model, or a second apparatus deploys the user-level model for the first apparatus. Therefore, the first apparatus executes a first task based on the user-level model.

According to a first aspect of this application, a model indication method is provided. The method may be performed by a first apparatus. The first apparatus may be a terminal device or a network device, a component (for example, a processor, a chip, or a chip system) in a terminal device or a network device, a logical module or software that can implement all or some of functions of a terminal device, or a logical module or software that can implement all or some of functions of a network device. The method includes:

The first apparatus sends feature information to a second apparatus, where the feature information represents a feature of a first task. The first apparatus receives first information from the second apparatus, where the first information indicates a user-level model, the user-level model is determined based on the feature information and a public model of each level that is in the second apparatus and that is related to the first task, and the user-level model is used by the first apparatus to execute the first task. In this way, the first apparatus obtains the user-level model, or the second apparatus deploys the user-level model for the first apparatus. Therefore, the first apparatus executes the first task based on the user-level model.

According to the first aspect, in a possible implementation, the method further includes: The first apparatus determines the feature information based on task information of the first task; or the first apparatus determines the feature information based on task information of the first task and/or auxiliary information of the first apparatus. In this implementation, a possible generation manner of the feature information is shown. The first apparatus may determine the feature information based on the task information of the first task and/or the auxiliary information of the first apparatus. Therefore, the feature of the first task is represented to the second apparatus.

According to the first aspect, in a possible implementation, the auxiliary information includes at least one of the following: capability information, location information, a statistical parameter, or an environment parameter of the first apparatus. In this implementation, the first apparatus further generates the feature information based on the auxiliary information, to request an appropriate model from the second apparatus.

According to the first aspect, in a possible implementation, the feature information includes a feature vector; and that the first apparatus determines the feature information based on the task information of the first task and the auxiliary information includes: The first apparatus inputs the task information into a feature vector generation model, to obtain the feature vector output by the feature vector generation model; or the first apparatus uses the task information as an input parameter of a feature vector generation model, to obtain the feature vector output by the feature vector generation model. In this implementation, the first apparatus generates the feature vector by using the feature vector generation model. In this way, the task information is represented by using the feature vector, and the second apparatus does not need to translate or interpret the task information, but determines, by using the feature vector, a model required by the first apparatus. This helps simplify a processing operation of the second apparatus.

According to the first aspect, in a possible implementation, the feature information includes a feature vector; and that the first apparatus determines the feature information based on the task information of the first task and/or the auxiliary information of the first apparatus includes: The first apparatus inputs the task information and/or the auxiliary information into a feature vector generation model, to obtain the feature vector output by the feature vector generation model; or the first apparatus uses the task information and/or the auxiliary information as an input parameter of a feature vector generation model, to obtain the feature vector output by the feature vector generation model. In this implementation, the first apparatus generates the feature vector by using the feature vector generation model. In this way, the task information and the auxiliary information are represented by using the feature vector, and the second apparatus does not need to translate or interpret the task information and the auxiliary information, but determines, by using the feature vector, a model required by the first apparatus. This helps simplify a processing operation of the second apparatus.

According to the first aspect, in a possible implementation, the feature vector is a vector including a bit sequence.

According to the first aspect, in a possible implementation, before obtaining the feature vector output by the feature vector generation model, the method further includes: The first apparatus receives second information from the second apparatus, where the second information indicates the feature vector generation model. It may be learned that the second apparatus may configure the feature vector generation model for the first apparatus, so that the first apparatus generates the feature vector.

According to a second aspect of this application, a model indication method is provided. The method may be performed by a second apparatus. The second apparatus may be a terminal device or a network device, a component (for example, a processor, a chip, or a chip system) in a terminal device or a network device, a logical module or software that can implement all or some of functions of a terminal device, or a logical module or software that can implement all or some of functions of a network device. The method includes:

The second apparatus receives feature information from a first apparatus, where the feature information represents a feature of a first task. The second apparatus generates a user-level model based on a public model of each level that is in the second apparatus and that is related to the first task and the feature information, where the user-level model is used by the first apparatus to execute the first task. The second apparatus sends first information to the first apparatus, where the first information indicates the user-level model. In this way, the first apparatus obtains the user-level model, or the second apparatus deploys the user-level model for the first apparatus. Therefore, the first apparatus executes the first task based on the user-level model.

According to the second aspect, in a possible implementation, the feature information includes a feature vector, and that the second apparatus generates the user-level model based on the public model of each level related to the first task and the feature information includes: The second apparatus correlates the feature vector with a feature vector corresponding to the public model of each level that is in the second apparatus and that is related to the first task, to obtain a correlation coefficient of public model of each level related to the first task. The second apparatus performs, based on the correlation coefficient of the public model of each level related to the first task, weighting and fusion processing on the public model of each level related to the first task, to obtain the user-level model. It may be learned that the second apparatus determines an appropriate user-level model for the first apparatus based on the feature vector and the feature vector corresponding to the public model of each level related to the first task. In this way, the appropriate model is deployed for the first apparatus, and performance of executing the first task by the first apparatus is improved.

According to the second aspect, in a possible implementation, the feature information includes the feature vector, and the method further includes: The second apparatus sends second information to the first apparatus, where the second information indicates a feature vector generation model, and the feature vector generation model is used to generate the feature vector. In this way, the first apparatus generates the feature vector, so that the second apparatus quickly determines the appropriate model for the first apparatus based on the feature vector, and deploys the model for the first apparatus.

According to the second aspect, in a possible implementation, the feature vector is a vector including a bit sequence.

According to the second aspect, in a possible implementation, the feature information is generated based on task information of the first task, or the feature information is generated based on task information of the first task and/or auxiliary information of the first apparatus. In this implementation, two possible generation manners of the feature information are shown. For example, the feature information is generated based on the task information of the first task. Therefore, the feature of the first task is represented to the second apparatus.

According to the second aspect, in a possible implementation, the auxiliary information includes at least one of the following: capability information, location information, a statistical parameter, or an environment parameter of the first apparatus. In this implementation, the first apparatus further generates the feature information based on the auxiliary information, to request an appropriate model from the second apparatus.

According to the second aspect, in a possible implementation, the task information includes at least one of the following: a task type or target performance of the first task. This helps the second apparatus deploy the appropriate model for the first apparatus. Therefore, effect or performance achieved by the first apparatus when executing the first task based on the model is improved.

According to the first aspect or the second aspect, in a possible implementation, the task type includes any one of the following: a channel state information (channel state information, CSI) compression feedback, beam prediction, mobility management, data encryption, a transceiver link, or model training. In this implementation, some possible task types are shown. This facilitates implementation of the solution.

According to the first aspect or the second aspect, in a possible implementation, the public model of each level related to the first task include at least one of the following: a first-level public model or a second-level public model that is related to the first task. In this implementation, the public model of a level related to the first task includes public models of a plurality of levels, and the public models of a plurality of levels may be generated by apparatuses of different levels. In this way, a higher-level apparatus sends a public model of a corresponding level to a lower-level apparatus. Therefore, AI services of a plurality of levels are provided, thereby facilitating better task execution.

According to the first aspect or the second aspect, in a possible implementation, the first-level public model, the second-level public model, and the user-level model are classified based on a size of an execution area corresponding to the first task. It may be learned from the above that public models of different levels may be classified based on the size of the area for executing the first task, thereby facilitating implementation of the solution. For example, an area in which the first-level public model takes effect may be the largest, an area in which the second-level public model takes effect is the medium, and the area in which the second-level public model takes effect belongs to the area in which the first-level public model takes effect. An area in which the user-level public model takes effect is the smallest, and the area in which the user-level public model takes effect belongs to the area in which the second-level public model takes effect. A multi-level public model is configured for the first task, which helps improve execution performance of the first task.

According to the first aspect or the second aspect, in a possible implementation, the first-level public model is a global public model related to the first task, and the second-level public model is a cell-level public model related to the first task, a sector-level public model related to the first task, a cell-level public model that is related to the first task and that is adapted to terminal devices of different capability levels, or a sector-level public model that is related to the first task and that is adapted to terminal devices of different capability levels. In this implementation, a possible implementation of the first-level public model and the second-level public model is shown. The first-level public model may be used by a user at a geographical level to execute the first task. The second-level public model may be used by the user at a cell level or a sector level to execute the first task.

According to the first aspect or the second aspect, in a possible implementation, the first-level public model, the second-level public model, and the user-level model are classified based on a primary-secondary relationship between tasks that the public models of levels are used to execute. Another possible level manner of the first-level public model, the second-level public model, and the user-level model is shown, thereby facilitating implementation of the solution. That is, multi-level public models are classified based on a relationship between tasks. For example, a task that the second-level public model is used to execute is a secondary task of a task that the first-level public model is used to execute. A task that the user-level model is used to execute is a secondary task of the task that the second-level public model is used to execute. In this way, a public model of a corresponding level is subclassified based on a task execution precision degree. This helps configure the appropriate model for the first apparatus, and improve performance achieved by the first apparatus when executing the first task.

According to the second aspect, in a possible implementation, the method further includes: A third apparatus sends third information to the second apparatus, where the third information indicates the first-level public model; and correspondingly the second apparatus receives the third information from the third apparatus. The second apparatus adjusts the first-level public model, to obtain the second-level public model. In this implementation, the third apparatus may be understood as an apparatus of a high level, and the second apparatus may be understood as an apparatus of a low level. The third apparatus sends the first-level public model (which may be understood as a high-level public model) to the second apparatus. In this way, the second apparatus generates the second-level public model (which may be understood as an intermediate public model). Therefore, AI services of a plurality of levels can be provided. It should be noted that the implementation may be used as an independent aspect, that is, the implementation may not depend on any one of the second aspect or the implementations shown in the second aspect.

According to a third aspect of this application, a model generation method is provided. The method may be performed by a first apparatus. The first apparatus may be a terminal device or a network device, a component (for example, a processor, a chip, or a chip system) in a terminal device or a network device, a logical module or software that can implement all or some of functions of a terminal device, or a logical module or software that can implement all or some of functions of a network device. The method includes:

The first apparatus receives first information from a second apparatus, where the first information indicates information about a public model of a level related to a first task. The first apparatus generates a user-level model based on the first information, where the user-level model is used by the first apparatus to execute the first task. In this way, the first apparatus generates the user-level model based on the first information. Therefore, the first apparatus executes the first task based on the user-level model.

According to the third aspect, in a possible implementation, the first information includes at least one of the following: reference information or adjustment information, the reference information indicates related information of the public model of a level that is referenced by the first apparatus for generating the user-level model, and the adjustment information indicates related information for adjusting the public model of a level. In this implementation, a possible implementation of content included in the first information is shown. In this way, the first apparatus determines the user-level model based on the reference information and the adjustment information. Therefore, the first apparatus obtains the user-level model, and executes the first task by using the user-level model.

According to the third aspect, in a possible implementation, that the first apparatus generates the user-level model based on the first information includes: The first apparatus determines the public model of a level based on the reference information. The first apparatus adjusts the public model of a level based on the adjustment information, to obtain the user-level model.

According to the third aspect, in a possible implementation, the reference information includes at least one of the following: area information, task information of the first task, first indication information, or second indication information, the area information indicates an area in which the public model of a level reused by the first apparatus takes effect, the first indication information indicates the public model of a level, and the second indication information indicates a reuse manner of the public model of a level. In this implementation, content included in the reference information is shown. Therefore, the first apparatus determines the public model of a level.

According to the third aspect, in a possible implementation, the adjustment information includes at least one of the following: adjustment information of a model parameter of the public model of a level, adjustment information of a model structure of the public model of a level, or adjustment information of quantization precision of a model parameter of the public model of a level. In this way, the first apparatus adjusts the public model of a level based on the adjustment information, to obtain the user-level model. Therefore, the first apparatus obtains the user-level model, and executes the first task by using the user-level model.

According to the third aspect, in a possible implementation, the method further includes: The first apparatus generates a first feature vector, where the first feature vector represents a feature of the first task. The first apparatus correlates the first feature vector with a second feature vector, to obtain a correlation coefficient between the first feature vector and the second feature vector, where the second feature vector represents a feature of the public model of a level. That the first apparatus generates the user-level model based on the first information includes: When the correlation coefficient between the first feature vector and the second feature vector falls within a threshold range of the correlation coefficient, the first apparatus generates the user-level model based on the first information and third indication information, where the third indication information indicates the reuse manner of the public model of a level. The first apparatus determines the user-level model based on the first information. Therefore, the first apparatus obtains the user-level model, and executes the first task by using the user-level model.

According to the third aspect, in a possible implementation, the first information includes at least one of the following: the threshold range of the correlation coefficient, an index of the public model of a level, or the third indication information; or the method further includes: the first apparatus receives second information from the second apparatus, where the second information includes at least one of the following: the threshold range of the correlation coefficient, the index of the public model of a level, or the third indication information. Therefore, the first apparatus is assisted in generating the user-level model.

According to the third aspect, in a possible implementation, that the first apparatus generates the first feature vector includes: The first apparatus generates the first feature vector based on the task information of the first task; or the first apparatus generates the first feature vector based on the task information and/or auxiliary information. Therefore, the first feature vector represents a task feature of the first task, so that the first apparatus compares the first feature vector with the second feature vector, and the first apparatus determines whether to reuse the public model of a level indicated by the first information.

According to the third aspect, in a possible implementation, the auxiliary information includes at least one of the following: capability information, location information, a statistical parameter, or an environment parameter of the first apparatus. In this implementation, the first apparatus further generates the first feature vector based on the auxiliary information, so that the first apparatus determines whether to reuse the public model of a level indicated by the first information.

According to the third aspect, in a possible implementation, the first feature vector is a vector including a bit sequence.

According to the third aspect, in a possible implementation, the method further includes: The first apparatus receives the second feature vector from the second apparatus. Therefore, the first apparatus determines, based on the first feature vector and the second feature vector, whether to reuse the public model of a level indicated by the first information, and the first apparatus determines the user-level model.

According to the third aspect, in a possible implementation, the first information is carried in a system message or a user-specific message.

According to the third aspect, in a possible implementation, the first information includes the model parameter of the public model of a level and/or the model structure of the public model of a level. Therefore, the first apparatus obtains the public model of a level.

According to the third aspect, in a possible implementation, the reuse manner includes any one of the following:

using the public model of a level as the user-level model, using the model structure of the public model of a level as a model structure of the user-level model, using the model parameter of the public model of a level as a model parameter of the user-level model, or using the public model of a level as a teacher (Teacher) to train the user-level model. This shows a plurality of possible implementations of the reuse manner, so that the first apparatus determines the user-level model in the reuse manner indicated by the first information.

According to a fourth aspect of this application, a model generation method is provided. The method may be performed by a second apparatus. The second apparatus may be a terminal device or a network device, a component (for example, a processor, a chip, or a chip system) in a terminal device or a network device, a logical module or software that can implement all or some of functions of a terminal device, or a logical module or software that can implement all or some of functions of a network device. The method includes:

The second apparatus determines first information, where the first information indicates information about a public model of a level related to a first task. The second apparatus sends the first information to a first apparatus, where the first information is used by the first apparatus to generate a user-level model, and the user-level model is used by the first apparatus to execute a first task. In this way, the first apparatus generates the user-level model based on the first information. Therefore, the first apparatus executes the first task based on the user-level model.

According to the fourth aspect, in a possible implementation, the first information includes at least one of the following: reference information or adjustment information, the reference information indicates related information of the public model of a level that is referenced by the first apparatus for generating the user-level model, and the adjustment information indicates related information for adjusting the public model of a level. In this implementation, a possible implementation of content included in the first information is shown. In this way, the first apparatus determines the user-level model based on the reference information and the adjustment information. Therefore, the first apparatus obtains the user-level model, and executes the first task by using the user-level model.

According to the fourth aspect, in a possible implementation, the reference information includes at least one of the following: area information, task information of the first task, first indication information, or second indication information, the area information indicates an area in which the public model of a level reused by the first apparatus takes effect, the first indication information indicates the public model of a level, and the second indication information indicates a reuse manner of the public model of a level. In this implementation, content included in the reference information is shown. Therefore, the first apparatus determines the public model of a level.

According to the fourth aspect, in a possible implementation, the adjustment information includes at least one of the following: adjustment information of a model parameter of the public model of a level, adjustment information of a model structure of the public model of a level, or adjustment information of quantization precision of a model parameter of the public model of a level. In this way, the first apparatus adjusts the public model of a level based on the adjustment information, to obtain the user-level model. Therefore, the first apparatus obtains the user-level model, and executes the first task by using the user-level model.

According to the fourth aspect, in a possible implementation, the first information further includes at least one of the following: a threshold range of a correlation coefficient, an index of the public model of a level, or third indication information, and the third indication information indicates the reuse manner of the public model of a level; or the method further includes: the second apparatus sends second information to the first apparatus, where the second information includes at least one of the following: a threshold range of a correlation coefficient, an index of the public model of a level, or third indication information. In this implementation, content further included in the first information is shown. In this way, the first apparatus determines the user-level model based on the first information. Alternatively, the second apparatus sends the second information to the first apparatus. Therefore, the first apparatus obtains the user-level model, and executes the first task by using the user-level model.

According to the fourth aspect, in a possible implementation, the reuse manner includes any one of the following: using the public model of a level as the user-level model, using the model structure of the public model of a level as a model structure of the user-level model, using the model parameter of the public model of a level as a model parameter of the user-level model, or using the public model of a level as a teacher (Teacher) to train the user-level model. This shows a plurality of possible implementations of the reuse manner, so that the first apparatus determines the user-level model in the reuse manner indicated by the first information.

According to the fourth aspect, in a possible implementation, the method further includes: The second apparatus sends a second feature vector to the first apparatus, where the second feature vector represents a feature of the public model of a level. Therefore, the first apparatus determines, based on a first feature vector and the second feature vector, whether to reuse the public model of a level indicated by the first information, and the first apparatus determines the user-level model.

According to the fourth aspect, in a possible implementation, the first information is carried in a system message or a user-specific message.

According to the fourth aspect, in a possible implementation, the first information includes the model parameter of the public model of a level and/or the model structure of the public model of a level. Therefore, the first apparatus obtains

EP 4 773 653 A1

the public model of a level.

According to the third aspect or the fourth aspect, in a possible implementation, a public model of each level related to the first task includes at least one of the following: a first-level public model or a second-level public model that is related to the first task. In this implementation, the public model of a level related to the first task includes public models of a plurality of levels, and the public models of a plurality of levels may be generated by apparatuses of different levels. In this way, a higher-level apparatus sends a public model of a corresponding level to a lower-level apparatus. Therefore, AI services of a plurality of levels are provided, thereby facilitating better task execution.

According to the third aspect or the fourth aspect, in a possible implementation, the first-level public model, the second-level public model, and the user-level model are classified based on a size of an execution area corresponding to the first task. It may be learned from the above that public models of different levels may be classified based on the size of the area for executing the first task, thereby facilitating implementation of the solution. For example, an area in which the first-level public model takes effect may be the largest, an area in which the second-level public model takes effect is the medium, and the area in which the second-level public model takes effect belongs to the area in which the first-level public model takes effect. An area in which the user-level public model takes effect is the smallest, and the area in which the user-level public model takes effect belongs to the area in which the second-level public model takes effect. A multi-level public model is configured for the first task, which helps improve execution performance of the first task.

According to the third aspect or the fourth aspect, in a possible implementation, the first-level public model is a global public model related to the first task, and the second-level public model is a cell-level public model related to the first task, a sector-level public model related to the first task, a cell-level public model that is related to the first task and that is adapted to terminal devices of different capability levels, or a sector-level public model that is related to the first task and that is adapted to terminal devices of different capability levels. In this implementation, a possible implementation of the first-level public model and the second-level public model is shown. The first-level public model may be used by a user at a geographical level to execute the first task. The second-level public model may be used by the user at a cell level or a sector level to execute the first task.

According to the third aspect or the fourth aspect, in a possible implementation, the first-level public model, the second-level public model, and the user-level model are classified based on a primary-secondary relationship between tasks that the public models of levels are used to execute. Another possible level manner of the first-level public model, the second-level public model, and the user-level model is shown, thereby facilitating implementation of the solution. That is, multi-level public models are classified based on a relationship between tasks. For example, a task that the second-level public model is used to execute is a secondary task of a task that the first-level public model is used to execute. A task that the user-level model is used to execute is a secondary task of the task that the second-level public model is used to execute. In this way, a public model of a corresponding level is subclassified based on a task execution precision degree. This helps configure the appropriate model for the first apparatus, and improve performance achieved by the first apparatus when executing the first task.

According to the fourth aspect, in a possible implementation, the public model of a level related to the first task includes the second-level public model, and the method further includes: A third apparatus sends third information to the second apparatus, where the third information indicates the first-level public model; and correspondingly the second apparatus receives the third information from the third apparatus. The second apparatus adjusts the first-level public model, to obtain the second-level public model. In this implementation, the third apparatus may be understood as an apparatus of a high level, and the second apparatus may be understood as an apparatus of a low level. The third apparatus sends the first-level public model (which may be understood as a high-level public model) to the second apparatus. In this way, the second apparatus generates the second-level public model (which may be understood as an intermediate public model). Therefore, AI services of a plurality of levels can be provided. It should be noted that the implementation may be used as an independent aspect, that is, the implementation may not depend on any one of the fourth aspect or the implementations shown in the fourth aspect.

According to a fifth aspect of this application, a model indication method is provided. The method may be performed by a first apparatus. The first apparatus may be a terminal device or a network device, a component (for example, a processor, a chip, or a chip system) in a terminal device or a network device, a logical module or software that can implement all or some of functions of a terminal device, or a logical module or software that can implement all or some of functions of a network device. The method includes:

The first apparatus sends a first request to a second apparatus, where the first request is used to request a target-level public model. The first apparatus receives first information from the second apparatus, where the first information indicates the target-level public model. In this way, the second apparatus deploys an appropriate model for the first apparatus, and the first apparatus executes a first task based on the target-level public model.

According to the fifth aspect, in a possible implementation, the first request includes an identifier of the target-level public model.

According to the fifth aspect, in a possible implementation, the identifier of the target-level public model includes at least one of the following: a model provider identifier, a service identifier, an area identifier, or an index of the target-level public model in an area indicated by the area identifier, the model provider identifier indicates a provider of the target-level public model, the service identifier indicates the first task, the target-level public model is used to execute the first task, and the area identifier indicates an area in which the target-level public model takes effect. In this implementation, a possible format of the identifier of the target-public-level public model is shown. Therefore, the identifier of the target-level public model indicates information such as a task to which the target-level public model is applicable, the area in which the target-level public model takes effect, and the provider that provides the target-level public model, so that the first apparatus requests an appropriate public model of a level.

According to the fifth aspect, in a possible implementation, the first request further includes task information of the first task, and the target-level public model is used by the first apparatus to execute the first task. The first task is a task to be executed by the first apparatus. This helps the second apparatus indicate an appropriate model for the first apparatus. Specifically, a model structure, a model parameter, and the like may be included.

According to the fifth aspect, in a possible implementation, the method further includes: The first apparatus receives level public model library information from the second apparatus, where the level public model library information includes an identifier of a public model of at least one level, and the public model of at least one level includes the target-level public model. In this way, the first apparatus obtains the identifier of the public model of at least one level, and selects an identifier of a public model of one level from the identifier, to request the second apparatus to indicate the target-level public model to the first apparatus. Therefore, the first apparatus obtains the target-level public model, and executes the first task based on the target-level public model.

According to the fifth aspect, in a possible implementation, the level public model library information further includes a performance indicator of the public model of at least one level. In this way, the first apparatus learns performance of public model of each level, and this helps the first apparatus request an appropriate public model of a level. Therefore, performance of executing the first task by the first apparatus is improved.

According to a sixth aspect of this application, a model indication method is provided. The method may be performed by a second apparatus. The second apparatus may be a terminal device or a network device, a component (for example, a processor, a chip, or a chip system) in a terminal device or a network device, a logical module or software that can implement all or some of functions of a terminal device, or a logical module or software that can implement all or some of functions of a network device. The method includes:

The second apparatus receives a first request from a first apparatus, where the first request is used to request a target-level public model. The second apparatus sends first information to the first apparatus, where the first information indicates the target-level public model. In this way, the second apparatus deploys an appropriate model for the first apparatus, and the first apparatus executes a first task based on the target-level public model.

According to the sixth aspect, in a possible implementation, the first request includes an identifier of the target-level public model.

According to the sixth aspect, in a possible implementation, the identifier of the target-level public model includes at least one of the following: a model provider identifier, a service identifier, an area identifier, or an index of the target-level public model in an area indicated by the area identifier, the model provider identifier indicates a provider of the target-level public model, the service identifier indicates the first task, the target-level public model is used by the first apparatus to execute the first task, and the area identifier indicates an area in which the target-level public model takes effect. In this implementation, a possible format of the identifier of the target-public-level public model is shown. Therefore, the identifier of the target-level public model indicates information such as a task to which the target-level public model is applicable, the area in which the target-level public model takes effect, and the provider that provides the target-level public model, so that the first apparatus requests an appropriate public model of a level.

According to the sixth aspect, in a possible implementation, the first request further includes task information of the first task, and the target-level public model is used by the first apparatus to execute the first task. The first task is a task to be executed by the first apparatus. This helps the second apparatus indicate an appropriate model for the first apparatus. Specifically, a model structure, a model parameter, and the like may be included.

According to the sixth aspect, in a possible implementation, the method further includes: The second apparatus sends level public model library information to the first apparatus, where the level public model library information includes an identifier of a public model of at least one level, and the public model of at least one level includes the target-level public model. In this way, the first apparatus obtains the identifier of the public model of at least one level, and selects an identifier of a public model of one level from the identifier, to request the second apparatus to indicate the target-level public model to the first apparatus. Therefore, the first apparatus obtains the target-level public model, and executes the first task based on the target-level public model.

According to the sixth aspect, in a possible implementation, the level public model library information further includes a performance indicator of the public model of at least one level. In this way, the first apparatus learns performance of public model of each level, and this helps the first apparatus request an appropriate public model of a level. Therefore, performance of executing the first task by the first apparatus is improved.

According to the fifth aspect or the sixth aspect, in a possible implementation, the target-level public model is a first-level public model or a second-level public model. For example, the target-level public model is the first-level public model or the second-level public model that is related to the first task, and public models of a plurality of levels may be generated by apparatuses of different levels. In this way, a higher-level apparatus sends a public model of a corresponding level to a lower-level apparatus. Therefore, AI services of a plurality of levels are provided, thereby facilitating better task execution.

According to the fifth aspect or the sixth aspect, in a possible implementation, the first-level public model and the second-level public model are classified based on a size of an execution area corresponding to the first task. It may be learned from the above that public models of different levels may be classified based on the size of the area for executing the first task, thereby facilitating implementation of the solution. For example, an area in which the first-level public model takes effect may be the largest, an area in which the second-level public model takes effect is the medium, and the area in which the second-level public model takes effect belongs to the area in which the first-level public model takes effect. A multi-level public model is configured for the first task, which helps improve execution performance of the first task.

According to the fifth aspect or the sixth aspect, in a possible implementation, the first-level public model is a global public model related to the first task, and the second-level public model is a cell-level public model related to the first task, a sector-level public model related to the first task, a cell-level public model that is related to the first task and that is adapted to terminal devices of different capability levels, or a sector-level public model that is related to the first task and that is adapted to terminal devices of different capability levels. In this implementation, a possible implementation of the first-level public model and the second-level public model is shown. The first-level public model may be used by a user at a geographical level to execute the first task. The second-level public model may be used by the user at a cell level or a sector level to execute the first task.

According to the fifth aspect or the sixth aspect, in a possible implementation, the first-level public model, the second-level public model, and the user-level model are classified based on a primary-secondary relationship between tasks that the public models of levels are used to execute. Another possible level manner of the first-level public model and the second-level public model is shown, thereby facilitating implementation of the solution. That is, multi-level public models are classified based on a relationship between tasks. For example, a task that the second-level public model is used to execute is a secondary task of a task that the first-level public model is used to execute. In this way, a public model of a corresponding level is subclassified based on a task execution precision degree. This helps configure the appropriate model for the first apparatus, and improve performance achieved by the first apparatus when executing the first task.

According to the sixth aspect, in a possible implementation, the target-level public model is the second-level public model, and the method further includes: A third apparatus sends second information to the second apparatus, where the second information indicates the first-level public model; and correspondingly the second apparatus receives the second information from the third apparatus. The first apparatus adjusts the first-level public model, to obtain the second-level public model. In this implementation, the third apparatus may be understood as an apparatus of a high level, and the second apparatus may be understood as an apparatus of a low level. The third apparatus sends the first-level public model (which may be understood as a high-level public model) to the second apparatus. In this way, the second apparatus generates the second-level public model (which may be understood as an intermediate public model). Therefore, AI services of a plurality of levels can be provided. It should be noted that the implementation may be used as an independent aspect, that is, the implementation may not depend on any one of the sixth aspect or the implementations shown in the sixth aspect.

According to a seventh aspect of this application, a first apparatus is provided. The first apparatus includes: a transceiver module, configured to: send feature information to a second apparatus, where the feature information represents a feature of a first task; and receive first information from the second apparatus, where the first information indicates a user-level model, the user-level model is determined based on the feature information and a public model of each level that is in the second apparatus and that is related to the first task, and the user-level model is used by the first apparatus to execute the first task.

According to the seventh aspect, in a possible implementation, the first apparatus further includes a processing module.

The processing module is configured to: determine the feature information based on task information of the first task; or determine the feature information based on task information of the first task and/or auxiliary information of the first apparatus.

According to the seventh aspect, in a possible implementation, the auxiliary information includes at least one of the following: capability information, location information, a statistical parameter, or an environment parameter of the first apparatus.

According to the seventh aspect, in a possible implementation, the feature information includes a feature vector, and the processing module is specifically configured to: input the task information into a feature vector generation model, to obtain the feature vector output by the feature vector generation model; or use the task information as an input parameter of a feature vector generation model, to obtain the feature vector output by the feature vector generation model.

According to the seventh aspect, in a possible implementation, the feature information includes a feature vector, and the processing module is specifically configured to: input the task information and/or the auxiliary information into a feature vector generation model, to obtain the feature vector output by the feature vector generation model; or use the task information and/or the auxiliary information as an input parameter of a feature vector generation model, to obtain the feature vector output by the feature vector generation model.

According to the seventh aspect, in a possible implementation, the feature vector is a vector including a bit sequence.

According to the seventh aspect, in a possible implementation, the transceiver module is further configured to receive second information from the second apparatus, where the second information indicates the feature vector generation model.

According to an eighth aspect of this application, a second apparatus is provided. The second apparatus includes:

a transceiver module, configured to receive feature information from a first apparatus, where the feature information represents a feature of a first task; and

a processing module, configured to generate a user-level model based on a public model of each level that is in the second apparatus and that is related to the first task and the feature information, where the user-level model is used by the first apparatus to execute the first task.

The transceiver module is further configured to send first information to the first apparatus, where the first information indicates the user-level model.

According to the eighth aspect, in a possible implementation, the feature information includes a feature vector, and the processing module is specifically configured to: correlate the feature vector with a feature vector corresponding to the public model of each level that is in the second apparatus and that is related to the first task, to obtain a correlation coefficient of public model of each level related to the first task; and perform, based on the correlation coefficient of the public model of each level related to the first task, weighting and fusion processing on the public model of each level related to the first task, to obtain the user-level model.

According to the eighth aspect, in a possible implementation, the feature information includes a feature vector, and the transceiver module is further configured to: send second information to the first apparatus, where the second information indicates a feature vector generation model, and the feature vector generation model is used to generate the feature vector.

According to the eighth aspect, in a possible implementation, the feature vector is a vector including a bit sequence.

According to the eighth aspect, in a possible implementation, the feature information is generated based on task information of the first task, or the feature information is generated based on task information of the first task and/or auxiliary information of the first apparatus.

According to the eighth aspect, in a possible implementation, the auxiliary information includes at least one of the following: capability information, location information, a statistical parameter, or an environment parameter of the first apparatus.

According to the eighth aspect, in a possible implementation, the task information includes at least one of the following: a task type or target performance of the first task.

According to the seventh aspect or the eighth aspect, in a possible implementation, the task information includes at least one of the following: a task type or target performance of the first task.

According to the seventh aspect or the eighth aspect, in a possible implementation, the task type includes any one of the following: a CSI compression feedback, beam prediction, mobility management, data encryption, a transceiver link, or model training.

According to the seventh aspect or the eighth aspect, in a possible implementation, the public model of each level related to the first task include at least one of the following: a first-level public model or a second-level public model that is related to the first task.

According to the seventh aspect or the eighth aspect, in a possible implementation, the first-level public model, the second-level public model, and the user-level model are classified based on a size of an execution area corresponding to the first task.

According to the seventh aspect or the eighth aspect, in a possible implementation, the first-level public model is a global public model related to the first task, and the second-level public model is a cell-level public model related to the first task, a sector-level public model related to the first task, a cell-level public model that is related to the first task and that is adapted to terminal devices of different capability levels, or a sector-level public model that is related to the first task and that is adapted to terminal devices of different capability levels.

According to the seventh aspect or the eighth aspect, in a possible implementation, the first-level public model, the second-level public model, and the user-level model are classified based on a primary-secondary relationship between tasks that the public models of levels are used to execute.

According to the eighth aspect, in a possible implementation, the transceiver module is further configured to, and the method further includes: receive third information from a third apparatus, where the third information indicates the first-level public model; and the processing module is further configured to: adjust the first-level public model, to obtain the second-level public model.

According to a ninth aspect of this application, a first apparatus is provided. The first apparatus includes:

a transceiver module, configured to receive first information from a second apparatus, where the first information indicates information about a public model of a level related to a first task; and

a processing module, configured to generate a user-level model based on the first information, where the user-level model is used by the first apparatus to execute the first task.

According to the ninth aspect, in a possible implementation, the first information includes at least one of the following: reference information or adjustment information, the reference information indicates related information of the public model of a level that is referenced by the first apparatus for generating the user-level model, and the adjustment information indicates related information for adjusting the public model of a level.

According to the ninth aspect, in a possible implementation, the processing module is specifically configured to: determine the public model of a level based on the reference information; and adjust the public model of a level based on the adjustment information, to obtain the user-level model.

According to the ninth aspect, in a possible implementation, the reference information includes at least one of the following: area information, task information of the first task, first indication information, or second indication information, the area information indicates an area in which the public model of a level reused by the first apparatus takes effect, the first indication information indicates the public model of a level, and the second indication information indicates a reuse manner of the public model of a level.

According to the ninth aspect, in a possible implementation, the adjustment information includes at least one of the following: adjustment information of a model parameter of the public model of a level, adjustment information of a model structure of the public model of a level, or adjustment information of quantization precision of a model parameter of the public model of a level.

According to the ninth aspect, in a possible implementation, the processing module is further configured to: generate a first feature vector, where the first feature vector represents a feature of the first task; and correlate the first feature vector with a second feature vector, to obtain a correlation coefficient between the first feature vector and the second feature vector, where the second feature vector represents a feature of the public model of a level; and the processing module is specifically configured to: when the correlation coefficient between the first feature vector and the second feature vector falls within a threshold range of the correlation coefficient, generate the user-level model based on the first information and third indication information, where the third indication information indicates the reuse manner of the public model of a level.

According to the ninth aspect, in a possible implementation, the first information further includes at least one of the following: the threshold range of the correlation coefficient, an index of the public model of a level, or the third indication information; and the transceiver module is further configured to receive second information from the second apparatus, where the second information includes at least one of the following: the threshold range of the correlation coefficient, the index of the public model of a level, or the third indication information.

According to the ninth aspect, in a possible implementation, the processing module is specifically configured to: generate the first feature vector based on the task information of the first task; or generate the first feature vector based on the task information of the first task and/or auxiliary information of the first apparatus.

According to the ninth aspect, in a possible implementation, the auxiliary information includes at least one of the following: capability information, location information, a statistical parameter, or an environment parameter of the first apparatus.

According to the ninth aspect, in a possible implementation, the first feature vector is a vector including a bit sequence.

According to the ninth aspect, in a possible implementation, the transceiver module is further configured to receive a second feature vector from the second apparatus.

According to the ninth aspect, in a possible implementation, the first information is carried in a system message or a user-specific message.

According to the ninth aspect, in a possible implementation, the first information includes the model parameter of the public model of a level and/or the model structure of the public model of a level.

According to the ninth aspect, in a possible implementation, the reuse manner includes any one of the following: using the public model of a level as the user-level model, using the model structure of the public model of a level as a model structure of the user-level model, using the model parameter of the public model of a level as a model parameter of the user-level model, or using the public model of a level as a teacher (Teacher) to train the user-level model.

According to a tenth aspect of this application, a second apparatus is provided. The second apparatus includes:

a processing module, configured to determine first information, where the first information indicates information about a public model of a level related to a first task; and

a transceiver module, configured to send the first information to a first apparatus, where the first information is used by the first apparatus to generate a user-level model, and the user-level model is used by the first apparatus to execute the first task.

According to the tenth aspect, in a possible implementation, the first information includes at least one of the following: reference information or adjustment information, the reference information indicates related information of the public model of a level that is referenced by the first apparatus for generating the user-level model, and the adjustment information indicates related information for adjusting the public model of a level.

According to the tenth aspect, in a possible implementation, the reference information includes at least one of the following: area information, task information of the first task, first indication information, or second indication information, the area information indicates an area in which the public model of a level reused by the first apparatus takes effect, the first indication information indicates the public model of a level, and the second indication information indicates a reuse manner of the public model of a level.

According to the tenth aspect, in a possible implementation, the adjustment information includes at least one of the following: adjustment information of a model parameter of the public model of a level, adjustment information of a model structure of the public model of a level, or adjustment information of quantization precision of a model parameter of the public model of a level.

According to the tenth aspect, in a possible implementation, the first information includes at least one of the following: a threshold range of a correlation coefficient, an index of the public model of a level, or third indication information, and the third indication information indicates the reuse manner of the public model of a level.

According to the tenth aspect, in a possible implementation, the reuse manner includes any one of the following: using the public model of a level as the user-level model, using the model structure of the public model of a level as a model structure of the user-level model, using the model parameter of the public model of a level as a model parameter of the user-level model, or using the public model of a level as a teacher (Teacher) to train the user-level model.

According to the tenth aspect, in a possible implementation, the transceiver module is further configured to: send a second feature vector to the first apparatus, where the second feature vector represents a feature of the public model of a level.

According to the tenth aspect, in a possible implementation, the first information is carried in a system message or a user-specific message.

According to the tenth aspect, in a possible implementation, the first information includes the model parameter of the public model of a level and/or the model structure of the public model of a level.

According to the ninth aspect or the tenth aspect, in a possible implementation, a public model of each level related to the first task includes at least one of the following: a first-level public model or a second-level public model that is related to the first task.

According to the ninth aspect or the tenth aspect, in a possible implementation, the first-level public model, the second-level public model, and the user-level model are classified based on a size of an execution area corresponding to the first task.

According to the ninth aspect or the tenth aspect, in a possible implementation, the first-level public model is a global public model related to the first task, and the second-level public model is a cell-level public model related to the first task, a sector-level public model related to the first task, a cell-level public model that is related to the first task and that is adapted to terminal devices of different capability levels, or a sector-level public model that is related to the first task and that is adapted to terminal devices of different capability levels.

According to the ninth aspect or the tenth aspect, in a possible implementation, the first-level public model, the second-level public model, and the user-level model are classified based on a primary-secondary relationship between tasks that the public models of levels are used to execute.

According to the tenth aspect, in a possible implementation, the public model of a level related to the first task includes the second-level public model, and the transceiver module is further configured to: receive third information from a third apparatus, where the third information indicates the first-level public model; and adjust the first-level public model, to obtain the second-level public model.

According to an eleventh aspect of this application, a first apparatus is provided. The first apparatus includes: a transceiver module, configured to: send a first request to a second apparatus, where the first request is used to request a target-level public model; and receive first information from the second apparatus, where the first information indicates the target-level public model.

According to the eleventh aspect, in a possible implementation, the first request includes an identifier of the target-level public model.

According to the eleventh aspect, in a possible implementation, the identifier of the target-level public model includes at least one of the following: a model provider identifier, a service identifier, an area identifier, or an index of the target-level public model in an area indicated by the area identifier, the model provider identifier indicates a provider of the target-level public model, the service identifier indicates a first task, the target-level public model is used to execute the first task, and the area identifier indicates an area in which the target-level public model takes effect.

According to the eleventh aspect, in a possible implementation, the first request further includes task information of the first task, and the target-level public model is used by the first apparatus to execute the first task.

According to the eleventh aspect, in a possible implementation, the transceiver module is further configured to receive level public model library information from the second apparatus, where the level public model library information includes an identifier of a public model of at least one level, and the public model of at least one level includes the target-level public model.

According to the eleventh aspect, in a possible implementation, the level public model library information further includes a performance indicator of the public model of at least one level.

According to a twelfth aspect of this application, a second apparatus is provided. The second apparatus includes: a transceiver module, configured to: receive a first request from a first apparatus, where the first request is used to request a target-level public model; and send first information to the first apparatus, where the first information indicates the target-level public model.

According to the twelfth aspect, in a possible implementation, the first request includes an identifier of the target-level public model.

According to the twelfth aspect, in a possible implementation, the identifier of the target-level public model includes at least one of the following: a model provider identifier, a service identifier, an area identifier, or an index of the target-level public model in an area indicated by the area identifier, the model provider identifier indicates a provider of the target-level public model, the service identifier indicates a first task, the target-level public model is used by the first apparatus to execute the first task, and the area identifier indicates an area in which the target-level public model takes effect.

According to the twelfth aspect, in a possible implementation, the first request further includes task information of the first task, and the target-level public model is used by the first apparatus to execute the first task.

According to the twelfth aspect, in a possible implementation, the transceiver module is further configured to send level public model library information to the first apparatus, where the level public model library information includes an identifier of a public model of at least one level, and the public model of at least one level includes the target-level public model.

According to the twelfth aspect, in a possible implementation, the level public model library information further includes a performance indicator of the public model of at least one level.

According to the eleventh aspect or the twelfth aspect, in a possible implementation, the target-level public model is a first-level public model or a second-level public model.

According to the eleventh aspect or the twelfth aspect, in a possible implementation, the first-level public model and the second-level public model are classified based on a size of an execution area corresponding to the first task.

According to the eleventh aspect or the twelfth aspect, in a possible implementation, the first-level public model is a global public model related to the first task, and the second-level public model is a cell-level public model related to the first task, a sector-level public model related to the first task, a cell-level public model that is related to the first task and that is adapted to terminal devices of different capability levels, or a sector-level public model that is related to the first task and that is adapted to terminal devices of different capability levels.

According to the eleventh aspect or the twelfth aspect, in a possible implementation, the first-level public model, the second-level public model, and the user-level model are classified based on a primary-secondary relationship between tasks that the public models of levels are used to execute.

According to the twelfth aspect, in a possible implementation, the target-level public model is the second-level public model; the transceiver module is further configured to receive second information from a third apparatus, where the second information indicates the first-level public model; and the processing module is further configured to adjust the first-level public model, to obtain the second-level public model.

According to a thirteenth aspect of this application, a first apparatus is provided. The first apparatus includes a processor and a memory. The memory stores a computer program or computer instructions, and the processor is configured to invoke and run the computer program or the computer instructions stored in the memory, so that the processor implements any implementation of the first aspect, the third aspect, or the fifth aspect.

Optionally, the first apparatus further includes a transceiver, and the processor is configured to control the transceiver to receive or send a signal.

According to a fourteenth aspect of this application, a second apparatus is provided. The second apparatus includes a processor and a memory. The memory stores a computer program or computer instructions, and the processor is configured to invoke and run the computer program or the computer instructions stored in the memory, so that the processor implements any implementation of the second aspect, the fourth aspect, or the sixth aspect.

Optionally, the second apparatus further includes a transceiver, and the processor is configured to control the transceiver to receive or send a signal.

According to a fifteenth aspect of this application, a first apparatus is provided. The first apparatus includes a processor and an interface circuit. The processor is configured to: communicate with another apparatus through the interface circuit, and perform the method according to the first aspect, the third aspect, or the fifth aspect. There are one or more processors.

According to a sixteenth aspect of this application, a second apparatus is provided. The second apparatus includes a processor and an interface circuit. The processor is configured to: communicate with another apparatus through the interface circuit, and perform the method according to the second aspect, the fourth aspect, or the sixth aspect. There are one or more processors.

According to a seventeenth aspect of this application, a first apparatus is provided. The first apparatus includes a processor, configured to be connected to a memory, and configured to invoke a program stored in the memory, to perform the method according to the first aspect, the third aspect, or the fifth aspect. The memory may be located inside or outside the first apparatus. In addition, there are one or more processors.

According to an eighteenth aspect of this application, a second apparatus is provided. The second apparatus includes a processor, configured to be connected to a memory, and configured to invoke a program stored in the memory, to perform the method according to the second aspect, the fourth aspect, or the sixth aspect. The memory may be located inside or outside the second apparatus. In addition, there are one or more processors.

In an implementation, the first apparatus in the first aspect, the third aspect, the fifth aspect, the seventh aspect, the ninth aspect, or the eleventh aspect may be a chip or a chip system.

In an implementation, the second apparatus in the second aspect, the fourth aspect, the sixth aspect, the eighth aspect, the tenth aspect, or the twelfth aspect may be a chip or a chip system.

According to a nineteenth aspect of this application, a computer program product including computer instructions is provided. When the computer program product is run on a computer, the computer is enabled to perform any implementation of any one of the first aspect to the sixth aspect.

According to a twentieth aspect of this application, a computer-readable storage medium is provided. The computer-readable storage medium includes computer instructions. When the instructions are run on a computer, the computer is enabled to perform any implementation of any one of the first aspect to the sixth aspect.

According to a twenty-first aspect of this application, a chip apparatus is provided. The chip apparatus includes a processor, configured to invoke a computer program or computer instructions in a memory, so that the processor performs any implementation of any one of the first aspect to the sixth aspect.

Optionally, the processor is coupled to the memory through an interface.

According to a twenty-second aspect of this application, a communication system is provided. The communication system includes a first apparatus and a second apparatus, the first apparatus is configured to perform the method according to the first aspect, the third aspect, or the fifth aspect, and the second apparatus is configured to perform the method according to the second aspect, the fourth aspect, or the sixth aspect.

It may be learned from the foregoing technical solutions that the first apparatus sends the feature information to the second apparatus, where the feature information represents the feature of the first task. Then, the first apparatus receives the first information from the second apparatus, where the first information indicates the user-level model, the user-level model is determined based on the feature information and a public model of each level that is in the second apparatus and that is related to the first task, and the user-level model is used by the first apparatus to execute the first task. In this way, the first apparatus obtains the user-level model, or the second apparatus deploys the user-level model for the first apparatus. Therefore, the first apparatus executes the first task based on the user-level model.

## BRIEF DESCRIPTION OF DRAWINGS

FIG. 1 is a diagram of a communication system according to an embodiment of this application;
FIG. 2A is another diagram of a communication system according to an embodiment of this application;
FIG. 2B is still another diagram of a communication system according to an embodiment of this application;
FIG. 2C is still another diagram of a communication system according to an embodiment of this application;
FIG. 3 is a diagram of an embodiment of a model indication method according to an embodiment of this application;
FIG. 4 is a diagram of an embodiment of a model generation method according to an embodiment of this application;

FIG. 5 is a diagram of another embodiment of a model indication method according to an embodiment of this application;

FIG. 6 is a diagram of an identifier of a target-level public model according to an embodiment of this application;

FIG. 7 is a diagram of a structure of a first apparatus according to an embodiment of this application;

FIG. 8 is a diagram of another structure of a first apparatus according to an embodiment of this application;

FIG. 9 is a diagram of a structure of a second apparatus according to an embodiment of this application;

FIG. 10 is a diagram of another structure of a second apparatus according to an embodiment of this application;

FIG. 11 is a diagram of a structure of an apparatus according to an embodiment of this application;

FIG. 12 is a diagram of a structure of a terminal device according to an embodiment of this application; and

FIG. 13 is a diagram of a structure of a network device according to an embodiment of this application.

## DESCRIPTION OF EMBODIMENTS

Embodiments of this application provide a model indication method, a model generation method, and a related apparatus, so that a first apparatus obtains a user-level model, or a second apparatus deploys the user-level model for the first apparatus. Therefore, the first apparatus executes a first task based on the user-level model.

The following clearly and completely describes the technical solutions in embodiments of this application with reference to the accompanying drawings in embodiments of this application. It is clear that the described embodiments are merely some but not all of embodiments of this application. All other embodiments obtained by persons skilled in the art based on embodiments of this application without creative efforts shall fall within the protection scope of this application.

Reference to "an embodiment", "some embodiments", or the like described in this application means that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In descriptions of this application, unless otherwise specified, "/" means "or". For example, A/B may indicate A or B. A term "and/or" in this specification describes only an association relationship between associated objects and indicates that there may be three relationships. For example, A and/or B may indicate the following three cases: Only A exists, both A and B exist, and only B exists. In addition, "at least one" means one or more, and "a plurality of" means two or more. At least one of the following items (pieces) or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c each may be singular or plural.

It may be understood that, in this application, an "indication" may include a direct indication, an indirect indication, an explicit indication, and an implicit indication. When a piece of indication information indicates A, it may be understood as that the indication information carries A, directly indicates A, or indirectly indicates A.

In this application, information indicated by the indication information is referred to as to-be-indicated information. In a specific implementation process, there are a plurality of manners of indicating the to-be-indicated information. For example, the manners include but are not limited to a manner in which the to-be-indicated information, for example, the to-be-indicated information itself or an index of the to-be-indicated information, may be directly indicated, or a manner in which the to-be-indicated information may be indirectly indicated by indicating other information. There is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, protocol-stipulated), to reduce indication overheads to some extent.

The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

It may be understood that "sending" and "receiving" in this application indicate a signal transmission direction. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY through an air interface from another unit or module. "Sending" may alternatively be understood as "outputting" of a chip interface, and "receiving" may alternatively be understood as "inputting" of a chip interface.

In other words, sending and receiving may be performed between devices, for example, between a network device and a terminal device; or may be performed inside a device, for example, sending or receiving between components, modules, chips, software modules, or hardware modules inside the device through a bus, a cable, or an interface.

It may be understood that necessary processing, for example, encoding and modulation, may be performed on information between a source end for sending the information and a destination end. However, the destination end may understand valid information from the source end. Similar descriptions in this application may be understood similarly. Details are not described again.

The technical solutions of this application may be applied to a cellular communication system related to the 3rd generation partnership project (3rd generation partnership project, 3GPP), for example, a 4th generation (4th generation, 4G) communication system, a 5th generation (5th generation, 5G) communication system, or a communication system after the 5th generation communication system, for example, a 6th generation communication system. For example, the 4th generation communication system may include a long term evolution (long term evolution, LTE) communication system. The 5th generation communication system may include a new radio (new radio, NR) communication system. The technical solutions of this application may also be applied to a wireless fidelity (wireless fidelity, Wi-Fi) system, a communication system that supports convergence of a plurality of wireless technologies, a device-to-device (device-to-device, D2D) system, a vehicle-to-everything (vehicle-to-everything, V2X) communication system, a satellite communication system, and the like. The wireless communication system in this application further includes but is not limited to: a narrow band-internet of things (narrow band-internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, or a time division-synchronization code division multiple access (time division-synchronization code division multiple access, TD-SCDMA) system.

A communication system to which the technical solutions of this application are applicable includes a first apparatus and a second apparatus. Optionally, the communication system further includes a third apparatus.

Optionally, the first apparatus, the second apparatus, and the third apparatus may be apparatuses of three capability levels or apparatuses of three different levels.

Optionally, the first apparatus is a terminal device, or a chip, a chip system, or a processor in the terminal device, or a logical module, software, or the like that implements some or all functions of the terminal device. The second apparatus is an access network device, or a chip, a chip system, or a processor in the access network device, or a logical module, software, or the like that implements some or all functions of the access network device. In this implementation, optionally, the third apparatus is a core network device or another AI node, or a chip, a chip system, or a processor in the core network device or the another AI node, or a logical module, software, or the like that implements some or all functions of the core network device or functions of the another AI node.

Optionally, the first apparatus is an access network device, or a chip, a chip system, or a processor in the access network device, or a logical module, software, or the like that implements some or all functions of the access network device. The second apparatus is a core network device, or a chip, a chip system, or a processor in the core network device, or a logical module, software, or the like that implements some or all functions of the core network device. In this implementation, optionally, the third apparatus is a core network device, or a chip, a chip system, or a processor in the core network device, or a logical module, software, or the like that implements some or all functions of the core network device.

Optionally, the first apparatus is a weak terminal device, or a chip, a chip system, or a processor in the weak terminal device, or a logical module, software, or the like that implements some or all functions of the weak terminal device. The second apparatus is a strong terminal device, or a chip, a chip system, or a processor in the strong terminal device, or a logical module, software, or the like that implements some or all functions of the strong terminal device. In this implementation, optionally, the third apparatus is a network device or another AI node, or a chip, a chip system, or a processor in the network device or the another AI node, or a logical module, software, or the like that implements some or all functions of the network device or functions of the another AI node. The network device may be an access network device or a core network device.

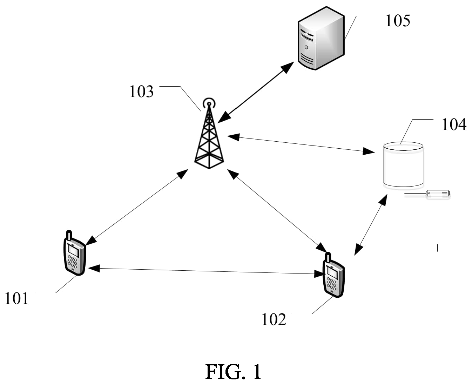

FIG. 1 is a diagram of a communication system according to an embodiment of this application. As shown in FIG. 1, a first apparatus is a terminal device 101, and a second apparatus is a base station 103. The terminal device 101 and the base station 103 may perform the technical solutions in this application. Alternatively, the first apparatus is the terminal device 101, and the second apparatus is a terminal device 102. The terminal device 101 and the terminal device 102 may perform the technical solutions in this application. As shown in FIG. 1, a communication system includes an independent AI network element 104, or an AI module may exist in each of a base station and a terminal device, to provide an AI service.

Optionally, the communication system further includes a core network device 105. A third apparatus may be a core network device 105 shown in FIG. 1.

The following describes a terminal device and a network device in this application.

The terminal device is also referred to as user equipment (user equipment, UE), a mobile station (mobile station, MS), a mobile terminal (mobile terminal, MT), customer premises equipment (customer premises equipment, CPE), or the like. The terminal device is a device that includes a wireless communication function (providing voice/data connectivity for a user), for example, a handheld device having a wireless connection function, a vehicle-mounted device, or a machine-type communication (machine-type communication, MTC) terminal. Currently, the terminal device may include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in self driving may be an uncrewed aerial vehicle, a helicopter, or an airplane. For example, the wireless terminal in vehicle-to-everything may be a vehicle-mounted device, an entire vehicle device, a vehicle-mounted module, a vehicle, or a ship. The wireless terminal in industrial control may be a camera, a robot, a robotic arm, or the like. The wireless terminal in the smart home may be a television, an air conditioner, a sweeper, a sound box, a set-top box, or the like.

It should be noted that the terminal device may be a device or an apparatus with a chip, a device or an apparatus integrated with a circuit, or a chip, a module, or a control unit in the device or the apparatus shown above. This is not specifically limited in this application.

The network device is a device that is deployed in a radio access network and that provides a wireless communication function for the terminal device. The network device may also be referred to as an access network (radio access network, RAN) entity, an access node, a network node, a communication apparatus, or the like.

Specifically, the network device may be an access network device of a cellular system related to the 3rd generation partnership project (3rd generation partnership project, 3GPP), for example, a 4th generation (4th generation, 4G) mobile communication system or a 5G mobile communication system. Alternatively, the network device may be an access network device in an open radio access network (open RAN, O-RAN, or ORAN) or a cloud radio access network (cloud radio access network, CRAN). Alternatively, the network device may be an access network device in a communication system obtained by converging two or more of the foregoing communication systems.

The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a radio controller in a CRAN scenario, a wireless backhaul node, a transmission point (transmission point, TP), or a transmission reception point (transmission reception point, TRP). Alternatively, the network device may be an access network device in a 5G mobile communication system, for example, a next generation NodeB (next generation NodeB, gNB), a TRP, or a TP in a new radio (new radio, NR) system, or one antenna panel or a group of antenna panels (including a plurality of antenna panels) of a base station in the 5G mobile communication system. Alternatively, the network device may be a network node that forms a gNB or a transmission point, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio frequency unit, for example, in a remote radio unit (remote radio unit, RRU), an active antenna unit (active antenna unit, AAU), or a remote radio head (remote radio head, RRH). Alternatively, the network device may be a server, a wearable device, a vehicle, a vehicle-mounted device, or the like. For example, in a V2X technology, the network device may be a road side unit (road side unit, RSU).

It should be noted that in different systems, the CU (or the CU-CP and the CU-UP), the DU, or the RU may have different names, but persons skilled in the art may understand meanings thereof. For example, in an open radio access network (open radio access network, ORAN) system, the CU may also be referred to as an open central unit (open central unit, O-CU) or an open CU, the DU may also be referred to as an open distributed unit (open distributed unit, O-DU), the central unit-control plane (central unit-control plane, CU-CP) may also be referred to as an open central unit-control plane (open central unit-control plane, O-CU-CP) or an open CU-CP, the central unit-user plane (central unit-user plane, CU-UP) may also be referred to as an open central unit-user plane (open central unit-user plane, O-CU-UP) or an open CU-UP, and the RU may also be referred to as an open radio unit (open radio unit, O-RU). This is not specifically limited in this application. Any unit in the CU, the CU-CP, the CU-UP, the DU, and the RU in this application may be implemented through a software module, a hardware module, or a combination of a software module and a hardware module.

Optionally, for the network elements in the ORAN system, each network element may implement a protocol layer function shown in Table 1.

Table 1

| ORAN network element | Protocol layer function |
|---|---|
| O-CU-CP | Radio resource control (radio resource control, RRC) and packet data convergence protocol control plane (packet data convergence protocol control plane, PDCP-C) |
| O-CU-UP | Service data adaptation protocol (service data adaptation protocol, SDAP) and packet data convergence protocol user plane (packet data convergence protocol user plane, PDCP-U) |
| O-DU | Radio link control (radio link control, RLC), medium access control (medium access control, MAC), and physical higher layer (PHY-high) |
| O-RU | Physical lower layer (PHY-low) |

It should be noted that the network device may be one or more network elements shown in Table 1. This is not specifically limited in this application.

It should be noted that Table 1 is merely an example. During actual application, the protocol layer function supported by each network element is not limited. For example, each network element may support more protocol layer functions, or a protocol layer function supported by each network element is specifically configured based on an actual situation. This is not specifically limited in this application.

Architectures of the CU and the DU of the access network device are described below. The access network device includes at least one CU and at least one DU. Optionally, the access network device further includes at least one RU.

Descriptions are provided below by using an example in which the access network device includes one CU and one DU. The CU has some functions of a core network, and the CU may include a CU-CP and a CU-UP. The CU and the DU may be configured based on protocol layer functions of a wireless network that are implemented by the CU and the DU. For example, the CU is configured to implement functions of a packet data convergence protocol (packet data convergence protocol, PDCP) layer and a protocol layer above (for example, an RRC layer and/or an SDAP layer). The DU is configured to implement functions of a protocol layer below the PDCP layer (for example, an RLC layer, a MAC layer, and/or a physical (physical, PHY) layer). For another example, the CU is configured to implement functions of a protocol layer above a PDCP layer (for example, an RRC layer and/or an SDAP layer), and the DU is configured to implement functions of the PDCP layer and a protocol layer below (for example, an RLC layer, a MAC layer, and/or a PHY layer).

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may perform interaction with a network element configured to implement a control plane function in the core network. The network element configured to implement the control plane function in the core network may be an access and mobility function network element, for example, an access and mobility management function (access and mobility management function, AMF) in the 5G mobile communication system. The access and mobility function network element is configured to be responsible for mobility management in a mobile network, for example, location update of the terminal device, network registration of the terminal device, and handover of the terminal device. The CU-UP may perform interaction with a network element configured to implement a user plane function in the core network. The network element configured to implement the user plane function in the core network, for example, a user function (user plane function, UPF) in the 5G mobile communication system, is configured to be responsible for forwarding and receiving data in the terminal device.

The foregoing configuration of the CU and the DU is merely an example. Alternatively, functions of the CU and the DU may be configured as needed. For example, the CU or the DU may be configured to have functions of more protocol layers, or the CU or the DU may be configured to have some processing functions of protocol layers. For example, some functions of the RLC layer and a function of a protocol layer above the RLC layer are set in the CU, and remaining functions of the RLC layer and a function of a protocol layer below the RLC layer are set in the DU. For another example, functions of the CU or the DU may alternatively be obtained through division based on a service type or another system requirement. For example, division is performed based on a delay. In this case, functions whose processing time needs to satisfy a small delay requirement are disposed in the DU, and functions whose processing time does not need to satisfy the delay requirement are disposed in the CU.

The DU and the RU may work together to implement a function of the PHY layer. One DU may be connected to one or more RUs. Functions of the DU and the RU may be configured in a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of functions of the physical layer, and the part of functions are closer to the MAC layer. The lower-layer function of the physical layer may include the other part of functions of the physical layer, and the other part of functions are closer to an intermediate radio frequency side.

Optionally, the network device may alternatively be a core network device. The core network device is responsible for access control, registration management, service management, mobility management, and the like for the terminal device to access the network. For example, the core network device is an AMF.

It should be noted that the network device may be the device or the apparatus shown above, or may be a component (for example, a chip), a module, or a unit in the device or the apparatus shown above. This is not specifically limited in this application.

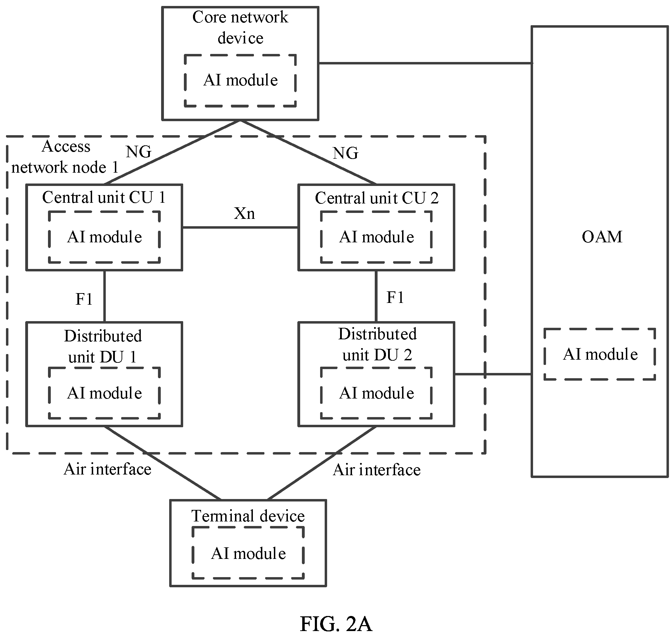

In the communication system provided in this application, an AI network element may be introduced to implement some or all AI-related operations. The AI network element may also be referred to as an AI node, an AI device, an AI entity, an AI module, an AI model, an AI unit, or the like. The AI network element may be built in a network element in a communication system. For example, the AI network element may be an AI module built in an access network device, a core network device, a cloud server, or an operation, administration and maintenance (operation, administration and maintenance, OAM), to implement an AI-related function. The OAM may be used as a network management system of a core network device and/or as a network management system of an access network device. Alternatively, the AI network element may be an independently disposed network element in the communication system. Optionally, the terminal device or a chip built in the terminal device may alternatively include an AI entity, configured to implement an AI-related function. With reference to FIG. 2A, the following describes another communication system provided in embodiments of this application.

FIG. 2A is another diagram of a communication system according to an embodiment of this application. As shown in FIG. 2A, network elements in the communication system are connected to each other through an interface (for example, an NG interface or an Xn interface) or an air interface. One or more AI modules (for clarity, FIG. 2A shows only one AI module) are disposed in these network element nodes (for example, one or more of a core network device, an access network node (a RAN node), a terminal, or an OAM). The access network node may be used as an independent RAN node, or may include a plurality of RAN nodes, for example, include a CU and a DU. One or more AI modules may alternatively be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of a quantity of neural network layers, a width of a neural network, a connection relationship between layers, a weight of a neuron, an activation function of a neuron, or a bias in an activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain an output through inference, and the output includes one or more parameters. Learning processes, training processes, or inference processes of different models may be deployed on different nodes or devices, or may be deployed on a same node or device.

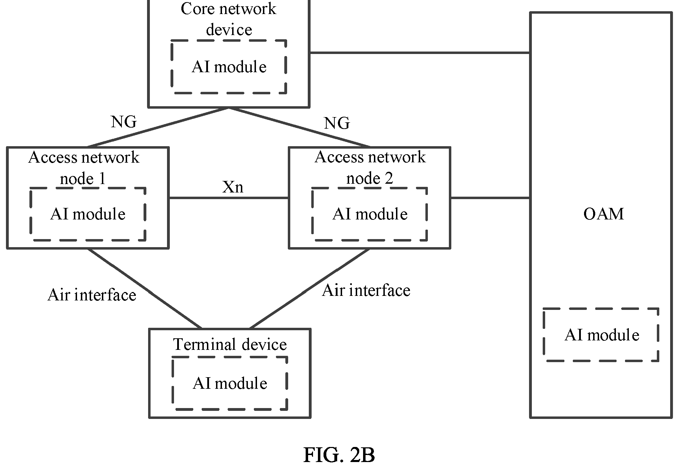

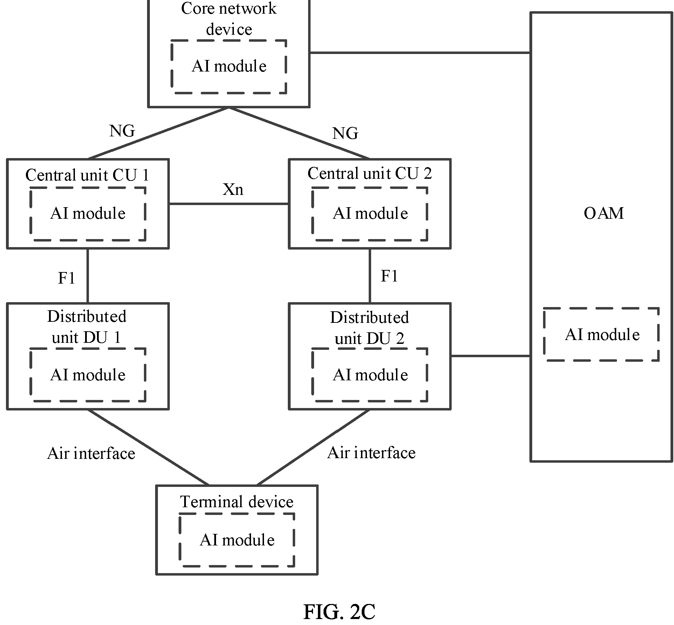

It should be noted that the access network node shown in FIG. 2A above may be used as a whole, or the access network node shown in FIG. 2A above uses an architecture in which the CU and the DU are separated. FIG. 2B is a diagram of a communication system in which an access network node is used as a whole and the access network node is connected to a terminal device. FIG. 2C is a diagram of a communication system in which an access network node uses an architecture in which a CU and a DU are separated.

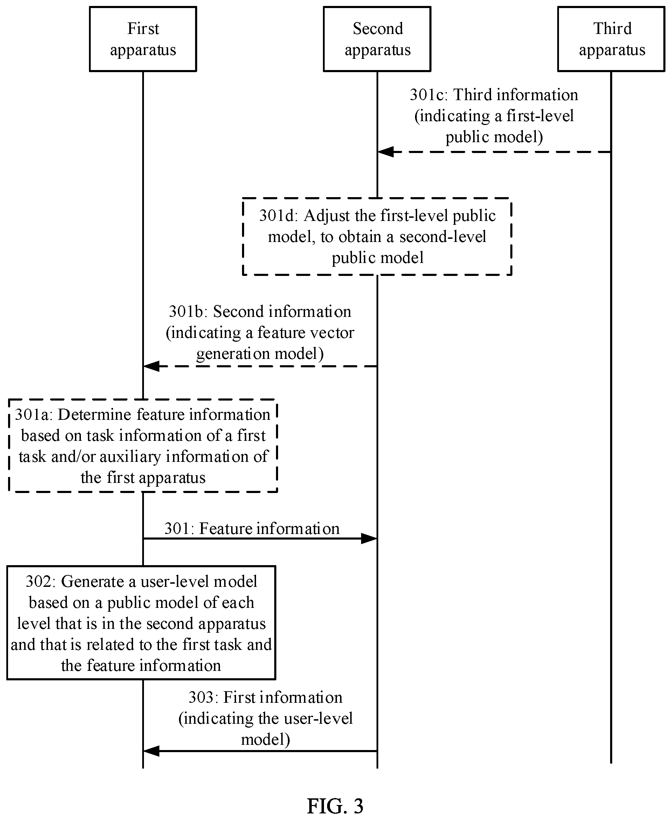

Currently, the terminal device may execute a corresponding task by using a model. Therefore, how the terminal device obtains, from a network, the model used to execute the task is a problem worth considering. For details, refer to related descriptions in embodiments shown in FIG. 3 to FIG. 5 below.

The following describes the technical solutions in this application with reference to specific embodiments.

FIG. 3 is a diagram of an embodiment of a model indication method according to an embodiment of this application. Refer to FIG. 3. The method includes the following steps.

301: A first apparatus sends feature information to a second apparatus. Correspondingly, the second apparatus receives the feature information from the first apparatus.

The feature information represents a feature of a first task.

Optionally, the embodiment shown in FIG. 3 further includes step 301a, and step 301a may be performed before step 301.

301a: The first apparatus determines the feature information based on task information of the first task and/or auxiliary information of the first apparatus.

The task information of the first task includes at least one of the following: a task type or target performance of the first task.

Optionally, the task type of the first task includes any one of the following: a CSI compression feedback, beam prediction, mobility management, data encryption, a transceiver link, model training, or the like. The task types shown herein are merely some examples, and are not specifically limited in this application. The target performance is execution effect or execution performance that needs to be achieved when the first task is executed by using a model. For example, the first task is CSI compression, and the target performance may be recovery accuracy of a channel feedback.

The auxiliary information includes at least one of the following: capability information, location information, a statistical parameter, or an environment parameter of the first apparatus.

Optionally, the statistical parameter includes at least one of the following: a service of the first apparatus, quality of service (quality of service, QoS), quality of experience (quality of experience, QoE), a feature of a channel between the first apparatus and the second apparatus, or the like. The environment parameter includes a temperature, humidity, or the like of an environment in which the first apparatus is located.

Optionally, the feature information is represented by using a feature vector, or the feature information is represented in another form. For example, the feature information is represented by using a feature matrix. This is not specifically limited in this application. The following uses the feature vector as an example for description.

Optionally, the first apparatus inputs the task information and/or the auxiliary information into a feature vector generation model, to obtain the feature vector output by the feature vector generation model; or the first apparatus uses the task information and/or the auxiliary information as an input parameter of a feature vector generation model, to obtain the feature vector output by the feature vector generation model.

Optionally, the feature vector may be a vector including a bit sequence. It may be understood that the first apparatus represents the task information of the first task and/or the auxiliary information by using the feature vector, that is, the first apparatus translates the task information and/or the auxiliary information into the feature vector. The first apparatus may specifically generate the feature vector by using the feature vector generation model. Therefore, the second apparatus obtains the feature vector, to determine the feature of the first task, and the second apparatus does not need to interpret the task information and/or the auxiliary information, to obtain the feature of the first task. This helps the second apparatus quickly deploy an appropriate user-level model for the first apparatus based on the feature vector.

Optionally, the embodiment shown in FIG. 3 further includes step 301b. Step 301b may be performed before step 301a.

301b: The second apparatus sends second information to the first apparatus, where the second information indicates the feature vector generation model. Correspondingly, the first apparatus receives the second information from the second apparatus.

302: The second apparatus generates a user-level model based on a public model of each level that is in the second apparatus and that is related to the first task and the feature information.

The user-level model is used by the first apparatus to execute the first task.

Optionally, the public model of each level related to the first task include public models of one or more levels. Public models of different levels in the public models of one or more levels may be generated by apparatuses of different capability levels or different levels. For example, a core network device is used as a highest-level apparatus, and an access network device is used as an intermediate apparatus. For example, the public model of each level related to the first task include at least one of the following: a first-level public model or a second-level public model that is related to the first task. The first-level public model may be generated by the core network device. The second-level public model may be generated by the access network device. The first-level public model may also be referred to as a primary public model, and the second-level public model may also be referred to as a high-level public model. The following uses the first-level public model and the second-level public model as an example for description. It should be noted that the public model of each level related to the first task may further include more public models of levels. This is not specifically limited in this application. For example, the public model of each level related to the first task further include a third-level public model. The first-level public model may be referred to as a primary public model, the second-level public model may be referred to as an intermediate public model, and the third-level public model may be referred to as a high-level public model.

In a possible implementation, the public models of one or more levels are classified based on a size of an execution area corresponding to the first task.

Optionally, the first-level public model is a global public model related to the first task. The global public model may be a public model used by a user in a region to execute the first task. The region may include one or more cells, or include one or more sectors. The second-level public model is a cell-level public model or a sector-level public model that is related to the first task.

For example, the global public model is applicable to a user in a region of Hangzhou to execute the first task, and the global public model has good generalization performance. The second-level public model is applicable to a user in a cell covered by the second apparatus in the region of Hangzhou to execute the first task. There are a plurality of cells in the region of Hangzhou, and communication, geography, and users in the cells, and task features of the first task are different. The second-level public model may be generated based on a feature in the cell covered by the second apparatus. The second-level public model is applicable to the user in the cell covered by the second apparatus to execute the first task.

Optionally, the first-level public model is a global public model related to the first task. The second-level public model is a cell-level public model that is related to the first task and that is adapted to terminal devices of different capability levels or a sector-level public model that is related to the first task and that is adapted to terminal devices of different capability levels.

For example, the global public model is applicable to a user in a region of Hangzhou to execute the first task, and the global public model has good generalization performance. The second-level public model may be a cell-level public model or a sector-level public model. The cell-level public model may be further classified into cell-level public models applicable to terminal devices of different capability levels. The sector-level public model may be further classified into sector-level public models applicable to terminal devices of different capability levels.

In this implementation, the public model of each level related to the first task may be understood as public models used to execute the first task in areas of different sizes. Areas in which public models of different levels take effect have an inclusive relationship or a being-included relationship. For example, an area in which the first-level public model takes effect includes an area in which the second-level public model takes effect.

In another possible implementation, the public models of one or more levels are classified based on a primary-secondary relationship between tasks that the public models of levels are used to execute. Tasks executed by public models of different levels have a primary-secondary relationship. A secondary task may be a task in a subclassification field of a primary task.

For example, the first-level public model is an image recognition public model, the second-level public model is an animal image recognition public model, and the user-level model is a bird image recognition public model. In other words, the first-level public model is used to execute an image recognition task, the second-level public model is used to execute an animal image recognition task, and the user-level model is used to execute a bird image recognition task.

For another example, the first-level public model is an area positioning public model, the second-level public model is an intra-area positioning public model, and the user-level model is an intra-area indoor positioning public model. In other words, the first-level public model is used to execute an area positioning task, the second-level public model is used to execute an intra-area positioning task, and the user-level model is used to execute an intra-area indoor positioning task.

For another example, the first-level public model is a moving target recognition public model, the second-level public model is a transportation means recognition public model in a moving target, and the user-level public model is a bicycle recognition public model in the moving target. In other words, the first-level public model is used to execute a moving target recognition task, the second-level public model is used to execute a transportation means recognition task in the moving target, and the user-level model is used to execute a bicycle recognition task in the moving target.

It may be learned from this that a task executed by the first-level public model may be understood as a primary task, and a task executed by the second-level public model may be understood as a first secondary task. Both the task executed by the second-level public model and a task executed by the third-level public model are secondary tasks of the task executed by the first-level public model, and the task executed by the third-level public model is a secondary task of the task executed by the second-level public model.

In this implementation, the public model of each level related to the first task may be understood as that there is a primary-secondary relationship between tasks that public models of all levels are used to execute. For example, the task executed by the first-level public model is a primary task of the task executed by the second-level public model.

Optionally, the feature information includes the feature vector. Step 302 specifically includes step 302a and step 302b.

302a: The second apparatus correlates the feature vector with a feature vector corresponding to the public model of each level that is in the second apparatus and that is related to the first task, to obtain a correlation coefficient of public model of each level related to the first task.

Performing correlation is performing correlation processing, that is, performing a correlation operation. The first apparatus performs correlation processing on the feature vector and the feature vector corresponding to the public model of each level that is in the second apparatus and that is related to the first task, to obtain the correlation coefficient of the public model of each level related to the first task.

For example, if the feature vector is represented as X, a feature vector corresponding to a level public model 1 related to the first task is represented as Y, and a feature vector corresponding to a level public model 2 related to the first task is represented as Z, a correlation coefficient between the feature vector X and the feature vector Y is represented as

$$\rho_{XY} = \frac{Cov(X,Y)}{\sqrt{D(X)}\sqrt{D(Y)}} = \frac{E((X - E(X)(Y - E(Y))}{\sqrt{D(X)}\sqrt{D(Y)}}$$

, and a correlation coefficient between the feature vector X and the feature vector Z is represented as $\rho_{XZ} = \dfrac{\text{Cov(X,Z)}}{\sqrt{D(X)}\sqrt{D(Z)}} = \dfrac{E((X-E(X)(Z-E(Z))}{\sqrt{D(X)}\sqrt{D(Z)}}$ . In the foregoing formula, the function E(a) represents obtaining an expected value of a, and the function D(a) represents obtaining a variance of a.

302b: The second apparatus performs, based on the correlation coefficient of the public model of each level related to the first task, weighting and fusion processing on the public model of each level related to the first task, to obtain the user-level model.

Specifically, the second apparatus uses the correlation coefficient of the public model of each level related to the first task as a weight of each public model of a level. Then, the second apparatus performs, based on the correlation coefficient of the public model of each level related to the first task, weighting and fusion processing on the public model of each level related to the first task, to obtain the user-level model. For example, the public models of levels related to the first task include a level public model 1 and a level public model 2. A correlation coefficient of the level public model 1 is $\rho_{XY}$, and a correlation coefficient of the level public model 2 is $\rho_{XZ}$. The second apparatus uses $\rho_{XY}$ as a weighting coefficient of the level public model 1, and uses $\rho_{XZ}$ as a weighting coefficient of the level public model 2. Then, the second apparatus performs based on a weighting coefficient of public model of each level, weighted fusion on the public model of each level related to the first task, to obtain the user-level public model.

303: The second apparatus sends first information to the first apparatus, where the first information indicates the user-level model. Correspondingly, the first apparatus receives the first information from the second apparatus.

Specifically, the first information includes a model structure and/or a model parameter of the user-level model.

Optionally, the embodiment shown in FIG. 3 further includes step 301c and step 301d. Step 301c and step 301d may be performed before step 302.

301c: A third apparatus sends third information to the second apparatus, where the third information indicates the first-level public model. Correspondingly, the second apparatus receives the third information from the third apparatus.

The first-level public model is a first-level public model related to the first task. For example, the first-level public model may be referred to as a global public model.

Specifically, the second apparatus receives task request information sent by one or more first apparatuses. Each piece of task request information includes at least one of the following: a type of the first task, a local parameter of the first apparatus (for example, a communication capability or a computational capability of the first apparatus), or a geographical location of the first apparatus. The second apparatus integrates the task request information sent by the one or more first apparatuses, to obtain cell-level task request information. The cell-level task request information corresponds to the first task. The second apparatus sends the cell-level task request information to the third apparatus. Then, the third apparatus completes training of the first-level public model based on the cell-level task request information. For example, the third apparatus may cooperate with the second apparatus or another AI node to train the first-level public model. The third apparatus sends the third information to the second apparatus, where the third information indicates the first-level public model. The same also applies to another task. The third apparatus may obtain first-level public models respectively related to a plurality of tasks, and indicate, to the second apparatus, the first-level public models respectively related to the plurality of tasks. For example, as shown in Table 2, the third apparatus may obtain global public models respectively related to a task 1 to a task N. The third apparatus may send, to the second apparatus, the global public models that are respectively related to the task 1 to the task N and that are shown in Table 2.

Table 2

| Task | Model |
|---|---|
| Task 1 | Global public model 1 |
| Task 2 | Global public model 2 |
| … | … |
| Task N | Global public model N |

301d: The second apparatus adjusts the first-level public model, to obtain the second-level public model.

Specifically, the second apparatus may adjust a model parameter and/or a model structure of the first-level public model, to obtain the second-level public model.

Optionally, the second apparatus may receive, from the third apparatus, the first-level public models respectively related to the plurality of tasks. The second apparatus may separately adjust the first-level public models related to the tasks, to obtain second-level public models corresponding to the tasks. For example, the second-level public model is a cell-level public model or a sector-level public model. For example, refer to Table 3 or Table 4.

Table 3

| Task | Model |
|---|---|
| Task 1 | Cell-level public model 1 (cell 1) |
| | Cell-level public model 2 (cell 2) |
| | … |
| | Cell-level public model M (cell M) |
| Task 2 | Cell-level public model 1 (cell 1) |
| | Cell-level public model 2 (cell 2) |
| | … |
| | Cell-level public model M (cell M) |
| … | … |
| Task N | Cell-level public model 1 (cell 1) |
| | Cell-level public model 2 (cell 2) |
| | … |
| | Cell-level public model M (cell M) |

Table 4

| Task | Model |
|---|---|
| Task 1 | Sector-level public model 1 (sector 1) |
| | Sector-level public model 2 (sector 2) |
| | … |
| | Sector-level public model S (sector S) |
| Task 2 | Sector-level public model 1 (sector 1) |
| | Sector-level public model 2 (sector 2) |
| | … |
| | Sector-level public model S (sector M) |
| … | … |
| Task N | Sector-level public model 1 (sector 1) |
| | Sector-level public model 2 (sector 2) |
| | … |
| | Sector-level public model S (sector M) |

For example, as shown in Table 2, the second apparatus is an access network device, and the third apparatus is a core network device. After the core network device receives cell-level task request information of the access network device, the core network device determines that there are a large quantity of user-level models of a user-requested task 1 in the region of Hangzhou. The core network device may train a global public model 1 of a task 1, and the global public model 1 has good generalization performance. The access network device is an access network device in the region of Hangzhou. The access network device may obtain the cell-level public model 1 or the sector-level public model 1 through training based on a feature of a cell (for example, a communication status, a geographical location, or a quantity of users of the cell) covered by the access network device, a global public model related to the task 1, and a dataset of the cell covered by the access network device. For example, the access network device adjusts a scale of the global public model related to the task 1. For example, a model parameter of the global public model is 100 M (mega), and the access network device simplifies the model parameter to 10 M.

It should be noted that there is no fixed execution sequence between step 301c and step 301d and step 301. Step 301 may be performed first, and then step 301c and step 301d are performed; or step 301c and step 301d may be performed first, and then step 301 is performed; or step 301c and step 301d and step 301 are performed simultaneously based on a situation. Optionally, if the embodiment shown in FIG. 3 further includes step 301a and step 301b, there is no fixed execution sequence between step 301a and step 301b and step 301. Step 301 may be performed first, and then step 301a and step 301b are performed; or step 301a and step 301b are performed first, and then step 301 is performed; or step 301 and step 301a and step 301b are performed simultaneously based on a situation. This is not specifically limited in this application.

It should be noted that step 301c and step 301d may be separately performed, or may be performed with reference to other steps in the embodiment shown in FIG. 3. This is not specifically limited in this application. That is, step 301c and step 301d may be used as an independent embodiment, and do not depend on the other steps in the embodiment shown in FIG. 3.

In this embodiment of this application, the first apparatus sends the feature information to the second apparatus, where the feature information represents the feature of the first task. Then, the first apparatus receives the first information from the second apparatus, where the first information indicates the user-level model, the user-level model is determined based on the feature information and a public model of each level that is in the second apparatus and that is related to the first task, and the user-level model is used by the first apparatus to execute the first task. In this way, the first apparatus obtains the user-level model, or the second apparatus deploys the user-level model for the first apparatus. Therefore, the first apparatus executes the first task based on the user-level model.

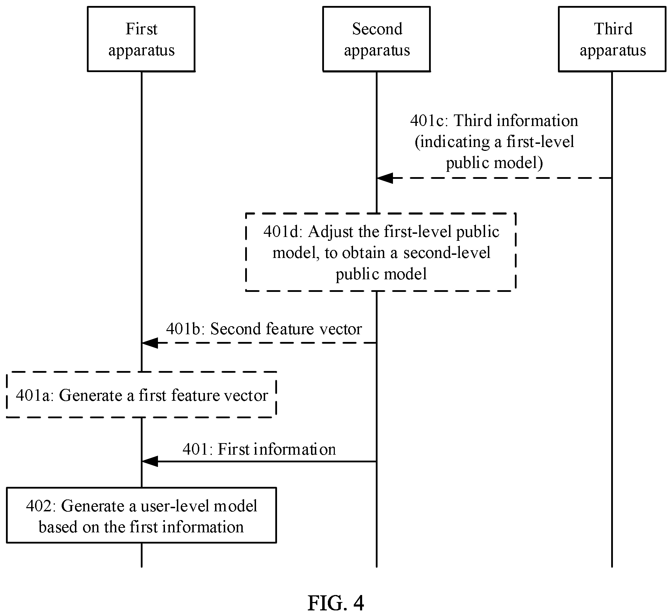

FIG. 4 is a diagram of an embodiment of a model generation method according to an embodiment of this application. Refer to FIG. 4. The method includes the following steps.

401: A second apparatus sends first information to a first apparatus. Correspondingly, the first apparatus receives the first information from the second apparatus.

The first information indicates information about a public model of a level related to a first task.

It may be understood that public models of one or more levels related to the first task may be generated by apparatuses of different capability levels or different levels. For example, a core network device is used as a highest-level apparatus, and an access network device is used as an intermediate apparatus. For example, the public model of each level related to the first task include at least one of the following: a first-level public model or a second-level public model that is related to the first task. The first-level public model may be generated by the core network device. The second-level public model may be generated by the access network device. The first-level public model may also be referred to as a primary public model, and the second-level public model is referred to as a high-level public model. The following uses the first-level public model and the second-level public model as an example for description. It should be noted that the public model of each level related to the first task may further include more public models of levels. This is not specifically limited in this application. For example, the public model of each level related to the first task further include a third-level public model. The first-level public model may be referred to as a primary public model, the second-level public model may be referred to as an intermediate public model, and the third-level public model may be referred to as a high-level public model. For a classification manner of the public models of one or more levels, refer to related descriptions in step 302 in the embodiment shown in FIG. 3. Details are not described herein again. Therefore, the public model of a level that is related to the first task and that is indicated by the first information may be the first-level public model, or may be the second-level public model. For example, the second apparatus is an access network device, and in step 401, the public model of a level related to the first task is a second-level public model, for example, a cell-level public model or a sector-level public model.

The following describes two possible implementations of the first information. This application is also applicable to another implementation. This is not specifically limited in this application.

1: The first information includes at least one of the following: reference information or adjustment information. The reference information indicates related information of the public model of a level that is referenced by the first apparatus for generating the user-level model. The adjustment information indicates related information for adjusting the public model of a level.

Optionally, the reference information includes at least one of the following: area information, task information of the first task, first indication information, or second indication information.

The area information indicates an area in which the public model of a level reused by the first apparatus takes effect. The first indication information indicates the public model of a level, and the second indication information indicates a reuse manner of the public model of a level.

The reuse manner includes any one of the following: using the public model of a level as the user-level model, using the model structure of the public model of a level as a model structure of the user-level model, using the model parameter of the public model of a level as a model parameter of the user-level model, or using the public model of a level as a teacher (Teacher) to train the user-level model. The user-level model is used by the first apparatus to execute the first task.

Optionally, the adjustment information includes at least one of the following: adjustment information of a model parameter of the public model of a level, adjustment information of a model structure of the public model of a level, or adjustment information of quantization precision of a model parameter of the public model of a level. For example, the adjustment information of the model parameter of the public model of a level includes scaling the model parameter of the public model of a level, adding a bias to the model parameter of the public model of a level, and/or the like. The adjustment information of the model structure of the public model of a level includes adjusting a quantity of neural network layers, a quantity of neurons, and/or a used activation function of the public model of a level. The adjustment information of the quantization precision of the model parameter of the public model of a level includes adjusting the quantization precision of the model parameter of the public model of a level, quantization precision of a model parameter transferred in a training process, and/or the like.

Optionally, the first information is carried in RRC signaling, a medium access control control element (medium access control control element, MAC CE), or downlink control information (downlink control information, DCI). This is not specifically limited in this application.

The following describes a possible format of the first information. The following format is not a limitation on the format of the first information, and the first information may alternatively be in another format. This is not specifically limited in this application.

Reference_Info_for_Model ::=        SEQUENCE {

ReferenceList       SEQUENCE(SIZE (1..maxNumber)) OFReference_Config_ID

……,

}

Reference_info ::=SEQUENCE {

    reference_id            Reference_Config_ID

    Area                    AreaInfo,

    Mission                 MissionInfo,

    Model      ModelIndex,

    ReferenceType           ENUMERATED {type0,type1,type2,…}

        ……

    }

It may be learned from the foregoing first information that AreaInfo is used to describe the area in which the public model of a level reused by the first apparatus takes effect, and MissionInfo is used to describe the task information of the first task, for example, a task type of the first task. For some possible implementations of the task type, refer to related descriptions in the embodiment shown in FIG. 3. ModelIndex indicates the public model of a level related to the first task, or a part of the public model of a level related to the first task. ReferenceType indicates the reuse manner of the public model of a level. For example, when a value of ReferenceType is type0, it indicates that the first apparatus directly uses the public model of a level, that is, the public model of a level is used as the user-level model. When a value of ReferenceType is type1, it indicates that the first apparatus may use the model structure of the public model of a level as the model structure of the user-level model. When a value of ReferenceType is type2, it indicates that the first apparatus may use the public model of a level as the teacher (Teacher) to train the user-level model, that is, obtain the user-level model through training by using the public model of a level as a reference.

In this implementation, a public model of a level related to one or more tasks is preconfigured in the first apparatus. Alternatively, the second apparatus sends, to the first apparatus by using a system message or a user-specific message, the public model of a level related to the one or more tasks. For example, the first apparatus is a terminal device, the second apparatus is an access network device, and the one or more tasks are a second-level public model. The second apparatus further sends the first information to the first apparatus.

2. The first information includes a model parameter and/or a model structure of a public model of a level related to the first task.

Optionally, the first information is carried in a system message or a user-specific message.

In a possible implementation, the first information further includes at least one of the following: a threshold range of a correlation coefficient, an index of the public model of a level, or third indication information, and the third indication information indicates a reuse manner of the public model of a level. For the reuse manner, refer to the foregoing related descriptions. Details are not described herein again. For a function of the threshold range of the correlation coefficient, refer to the following related descriptions.

In another possible implementation, the second apparatus sends second information to the first apparatus. Correspondingly, the first apparatus receives the second information from the second apparatus. The second information includes at least one of the following: a threshold range of a correlation coefficient, an index of the public model of a level, or third indication information. It should be noted that, in the two manners shown above, in one manner, the threshold range of the correlation coefficient, the index of the public model of a level, and the third indication information are all carried in the first information. In the other manner, the threshold range of the correlation coefficient, the index of the public model of a level, and the third indication information are carried in the second information. During actual application, there may be another implementation. This is not specifically limited in this application. For example, the second apparatus separately sends the threshold range of the correlation coefficient, the index of the public model of a level, and each piece of information in the third indication information; or the second apparatus sends the threshold range of the correlation coefficient and the index of the public model of a level together by using one piece of information, and then separately sends the third indication information. This is not specifically limited in this application.

The following describes a possible format of the second information. This application is also applicable to another format. This is not specifically limited in this application.

```
Reference_Info_for_Model ::=SEQUENCE {

        ReferenceList   SEQUENCE(SIZE (1..maxNumber)) OF Reference_Config_ID

        ……,

}

Reference_info ::=                      SEQUENCE {

        Reference_id      Reference_Config_ID

        Range                     SEQUENCE {

                Maximum          Value1;

                Minimum          Value2;

                }

        Model                          ModelIndex,

        MultiplexType                  ENUMERATED {type0,type1,type2,…}

                ……

        }
```

It may be learned from the foregoing second information that, Range indicates the threshold range of the correlation coefficient, and in the threshold range, a maximum value is a value (value) 1, and a minimum value is a value (value) 2. ModelIndex indicates the index of the public model of a level. MultiplexType indicates the reuse manner of the public model of a level. When a value of Multiplex Type is type0, it indicates that the first apparatus directly uses the public model of a level, that is, the public model of a level is used as the user-level model. When a value of MultiplexType is type1, it indicates that the first apparatus may use the model structure of the public model of a level as a model structure of the user-level model. When a value of MultiplexType is type2, it indicates that the first apparatus may use the public model of a level as the teacher (Teacher) to train the user-level model, that is, obtain the user-level model through training by using the public model of a level as a reference. A format of the first information may also be similar to a format of the second information. This is not specifically limited in this application.

In this implementation, the second apparatus may send, to the first apparatus by using a system message or a user-specific message, the public model of a level related to the one or more tasks. For example, the first apparatus is a terminal device, and the second apparatus is an access network device. The access network device sends, to the terminal device, a second-level public model related to the one or more tasks. For example, the second-level public model related to the one or more tasks may be a cell-level public model or a sector-level public model related to the one or more tasks.

402: The first apparatus generates the user-level model based on the first information.

The user-level model is used by the first apparatus to execute the first task.

The following describes step 402 with reference to two possible implementations of the first information.

1. The first information includes reference information and adjustment information. The following describes a possible implementation of step 402. Optionally, step 402 specifically includes step 402a and step 402b.

402a: The first apparatus determines a public model of a level based on the reference information.

Specifically, the reference information includes at least one of the following: area information, task information of the first task, first indication information, or second indication information. The first apparatus determines the public model of a level based on the first indication information. The first apparatus determines, based on the area information, an area in which the public model of a level takes effect. The first apparatus determines the reuse manner of the public model of a level based on the second indication information.

402b: The first apparatus adjusts the public model of a level based on the adjustment information, to obtain the user-level model.

For example, the first apparatus may adjust a model parameter and/or a model structure of the public model of a level, to obtain the user-level model.

2. The first information includes a model parameter and/or a model structure of a public model of a level related to the first task.

In a possible implementation, the first information includes at least one of the following: a threshold range of a correlation coefficient, an index of the public model of a level, or third indication information.

In another possible implementation, the second apparatus sends second information to the first apparatus. Correspondingly, the first apparatus receives the second information from the second apparatus. The second information includes at least one of the following: a threshold range of a correlation coefficient, an index of the public model of a level, or third indication information.

Optionally, the embodiment shown in FIG. 4 further includes step 401a. Step 401a may be performed before step 401.

401a: The first apparatus generates a first feature vector.

The first feature vector represents a feature of the first task.

Optionally, the first apparatus generates the first feature vector based on task information of the first task/or auxiliary information of the first apparatus. The task information of the first task includes at least one of the following: a task type or target performance of the first task. For the task type and the target performance of the first task, refer to related descriptions in step 301a in the embodiment shown in FIG. 3. Details are not described herein again. The auxiliary information includes at least one of the following: capability information, location information, a statistical parameter, or an environment parameter of the first apparatus.

Optionally, the statistical parameter includes at least one of the following: a service of the first apparatus, QoS, QoE, a feature of a channel between the first apparatus and the second apparatus, or the like. The environment parameter includes a temperature, humidity, or the like of an environment in which the first apparatus is located.

Optionally, the first feature vector is a vector including a bit sequence. It may be understood that the first apparatus represents the task information of the first task and/or the auxiliary information by using the first feature vector, that is, the first apparatus translates the task information and/or the auxiliary information into a form of the first feature vector. Optionally, the first apparatus uses the task information of the first task and/or the auxiliary information as an input parameter of a feature vector generation model, to obtain the first feature vector output by the feature vector generation model. The feature vector generation model may be preconfigured in the first apparatus, or may be sent by the second apparatus to the first apparatus. This is not specifically limited in this application.

Optionally, step 402 specifically includes: When the correlation coefficient between the first feature vector and a second feature vector falls within a threshold range of the correlation coefficient, the first apparatus generates the user-level model based on the first information and third indication information, where
the second feature vector represents a feature of the public model of a level.

Specifically, the first apparatus correlates the first feature vector with the second feature vector, that is, the first apparatus performs a correlation operation on the first feature vector and the second feature vector, to obtain the correlation coefficient between the first feature vector and the second feature vector. If the correlation coefficient falls within the threshold range of the correlation coefficient, the first apparatus determines the public model of a level based on the first information, and generates the user-level model based on the public model of a level and the third indication information. For example, if the third indication information indicates the first apparatus to directly use the public model of a level, the first apparatus uses the public model of a level as the user-level public model. For another example, the third indication information indicates that the first apparatus reuses the model structure of the public model of a level. In this case, the first apparatus uses the model structure of the public model of a level as the model structure of the user-level model, and then trains the user-level model to obtain the model parameter of the user-level model.

It may be learned that in this embodiment, the first apparatus may determine the user-level model by using the first information. This helps the first apparatus quickly obtain the user-level model, and further reduces air interface transmission overheads of deploying the model for the first apparatus by the second apparatus.

Optionally, the embodiment shown in FIG. 4 further includes step 401b. Step 401b may be performed before step 402.

401b: The second apparatus sends the second feature vector to the first apparatus. Correspondingly, the first apparatus receives the second feature vector from the second apparatus.

Optionally, the second apparatus generates feature vectors corresponding to public models of levels related to more tasks, and sends, to the first apparatus, the feature vectors corresponding to the public models of levels related to the more tasks.

Optionally, the second apparatus may send a system message or a user-specific message to the first apparatus. The system message or the user-specific message includes public models of levels respectively related to a plurality of tasks. Specifically, model parameters, model structures, and/or model indices of the public models of levels respectively related to the plurality of tasks may be included.

It should be noted that there is no fixed execution sequence between step 401a and step 401b and step 401. Step 401 may be first performed, and then step 401a and step 401b are performed; or step 401a and step 401b are first performed, and then step 401 is performed; or step 401a and step 401b and step 401 are performed simultaneously based on a situation. This is not specifically limited in this application.

It should be noted that there is no fixed execution sequence between step 401a and step 401b. Step 401a may be performed first, and then step 401b is performed; or step 401b is performed first, and then step 401a is performed; or step 401a and step 401b are performed simultaneously based on a situation. This application is not specifically limited.

Optionally, the embodiment shown in FIG. 4 further includes step 401c and step 401d. Step 401c and step 401d may be performed before step 402.

401c: A third apparatus sends third information to the second apparatus, where the third information indicates the first-level public model. Correspondingly, the second apparatus receives the third information from the third apparatus.

401d: The second apparatus adjusts the first-level public model, to obtain the second-level public model.

Step 401c and step 401d are similar to step 301c and step 301d in the embodiment shown in FIG. 3. For details, refer to related descriptions in step 301c and step 301d in the embodiment shown in FIG. 3. Details are not described herein again.

It should be noted that step 401c and step 401d may be separately performed, or may be performed with reference to other steps in the embodiment shown in FIG. 4. This is not specifically limited in this application. That is, step 401c and step 401d may be used as an independent embodiment, and do not depend on the other steps in the embodiment shown in FIG. 4.

It should be noted that there is no fixed execution sequence between step 401c and step 401d and step 401. Step 401 may be first performed, and then step 401c and step 401d are performed; or step 401c and step 401d are first performed, and then step 401 is performed; or step 401 and step 401c to step 401d are performed simultaneously based on a situation. This is not specifically limited in this application.

It should be noted that, if the embodiment shown in FIG. 4 further includes step 401a and step 401b, and there is no fixed execution sequence between step 401a and step 401b and step 401c and step 401d. Step 401a and step 401b may be performed first, and then step 401c and step 401d are performed; or step 401c and step 401d are performed first, and then step 401a and step 401b are performed; or step 401a and step 401b and step 401c and step 401d are performed simultaneously based on a situation. This is not specifically limited in this application.

In this embodiment of this application, the first apparatus receives the first information from the second apparatus, where the first information indicates the information about the public model of a level related to the first task. The first apparatus generates the user-level model based on the first information, where the user-level model is used by the first apparatus to execute the first task. In this way, the first apparatus generates the user-level model based on the first information. Therefore, the first apparatus executes the first task based on the user-level model.

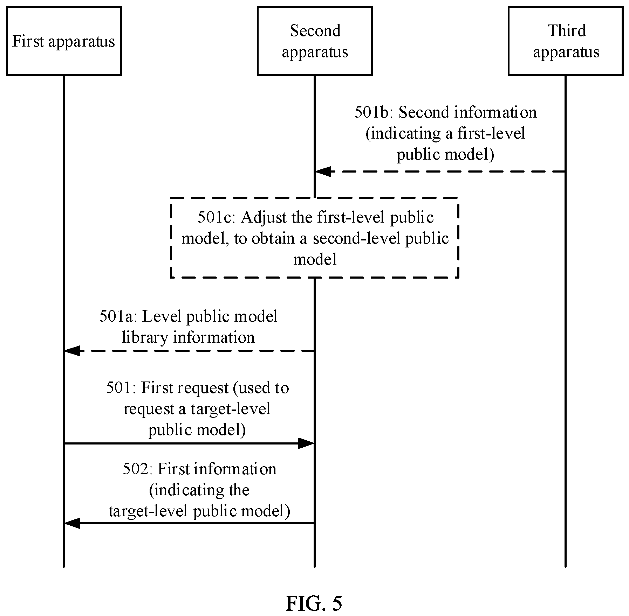

FIG. 5 is a diagram of another embodiment of a model indication method according to an embodiment of this application. Refer to FIG. 5. The method includes the following steps.

501: A first apparatus sends a first request to a second apparatus, where the first request is used to request a target-level public model. Correspondingly, the second apparatus receives the first request from the first apparatus.

Optionally, the first request includes an identifier of the target-level public model.

Optionally, the identifier of the target-level public model includes at least one of the following: a model provider identifier, a service identifier, an area identifier, or an index of the target-level public model in an area indicated by the area identifier.

The model provider identifier indicates a provider of the target-level public model. For example, the public model of a level may be provided by Huawei or Qualcomm. For example, a length of the model provider identifier may be 1 bit, 2 bits, or 3 bits. This is not specifically limited in this application. For example, if a value of the model provider identifier is 01, it indicates that the public model of a level is provided by Huawei.

The service identifier indicates a first task. Optionally, a length of the service identifier may be 1 bit, 2 bits, or 3 bits. This is not specifically limited in this application. For example, if the service identifier is 001, it indicates that the first task is a CSI compression feedback; if the service identifier is 010, it indicates that the first task is beam prediction; or if the service identifier is 011, it indicates that the first task is a transceiver link. It should be noted that optionally, the length of the service identifier may be determined by a quantity of task types of the first task.

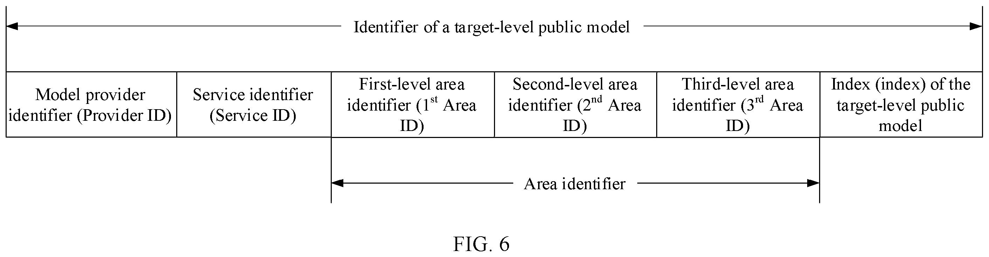

The area identifier indicates an area in which the target-level public model takes effect. Optionally, the area identifier includes at least one of the following: a first-level area identifier, a second-level area identifier, and a third-level area identifier. A first-level area may be an area covered by several base stations, a second-level area may be an area covered by one base station, and a third-level area may be an area covered by one sector of a base station. Herein, the third-level area is used as an example for description. During actual application, the area identifier may further include an identifier of an area of a lower level. This is not specifically limited in this application. Optionally, a quantity of bits occupied by each-level area identifier may be determined based on a quantity of classifications of each-level area. Refer to FIG. 6. A possible format of the identifier of the target-level public model is shown. As shown in FIG. 6, the model provider identifier (Provider ID) is a provider of the target-level public model. The service identifier (Service ID) indicates the first task. The first-level area identifier ($1^{st}$ Area ID) indicates the first-level area. The second-level area identifier ($2^{nd}$ Area ID) indicates the second-level area. The third-level area identifier ($3^{rd}$ Area ID) indicates the third-level area.

It should be noted that when a value of an identifier of an area of a specific level is all 0s or all 1s, it indicates that the public model of a level is globally unique in an upper-level area of the area of the specific level. For example, if values corresponding to the second-level area identifier and the third-level area identifier are all 0s or all 1s, it indicates that the public model of a level takes effect in the first-level area, and the second-level area and the third-level area are not further subclassified.

Optionally, the first request further includes task information of the first task. The first task is a task to be executed by the first apparatus. The target-level public model is used to execute the first task. Optionally, the task information of the first task includes at least one of the following: a task type or target performance of the first task. For the task type and the target performance, refer to related descriptions in the embodiment shown in FIG. 3.

It should be noted that the public model of a level related to the first task may include public models of one or more levels. The public models of one or more levels may be generated by apparatuses of different capability levels or different levels. For example, a core network device is used as a highest-level apparatus, and an access network device is used as an intermediate apparatus. For example, the public model of each level related to the first task include at least one of the following: a first-level public model or a second-level public model that is related to the first task. The first-level public model may be generated by the core network device. The second-level public model may be generated by the access network device. The first-level public model may also be referred to as a primary public model, and the second-level public model may also be referred to as a high-level public model. The following uses the first-level public model and the second-level public model as an example for description. It should be noted that the public model of each level related to the first task may further include more public models of levels. This is not specifically limited in this application. For example, the public model of each level related to the first task further include a third-level public model. The first-level public model may be referred to as a primary public model, the second-level public model may be referred to as an intermediate public model, and the third-level public model may be referred to as a high-level public model.

Therefore, the target-level public model may be a first-level public model, or may be a second-level public model. For example, if the first apparatus is a terminal device, and the second apparatus is an access network device, the target-level public model may be a second-level public model, for example, a cell-level public model or a sector-level public model. For another example, if the first apparatus is an access network device, and the second apparatus is a core network device, the target-level public model may be a first-level public model. For a classification manner of the public models of one or more levels, refer to related descriptions in step 302 in the embodiment shown in FIG. 3. Details are not described herein again.

Optionally, the embodiment shown in FIG. 5 further includes step 501a. Step 501a may be performed before step 501.

501a: The second apparatus sends level public model library information to the first apparatus. Correspondingly, the first apparatus receives the level public model library information from the second apparatus.

The level public model library information includes an identifier of a public model of at least one level. The public model of at least one level includes the target-level public model. For example, the first apparatus is a terminal device, and the second apparatus is an access network device. The level public model library information includes at least one second-level public model. The at least one second-level public model is a second-level public model corresponding to one or more tasks.

Optionally, the level public model library information further includes a performance indicator of the public model of at least one level, for example, a scenario to which public model of each level in the public model of at least one level is applicable, inference precision achieved by executing a task, and/or a model scale.

Optionally, the second apparatus may send the level public model library information to the first apparatus by using a broadcast message, a multicast message, or a unicast message.

Optionally, the embodiment shown in FIG. 5 further includes step 501b and step 501c. Step 501b and step 501c may be performed before step 502.

501b: A third apparatus sends second information to the second apparatus, where the second information indicates the first-level public model. Correspondingly, the second apparatus receives the second information from the third apparatus.

501c: The second apparatus adjusts the first-level public model, to obtain the second-level public model.

Step 501b and step 501c are similar to step 301c and step 301d in the embodiment shown in FIG. 3. For details, refer to related descriptions in step 301c and step 301d in the embodiment shown in FIG. 3.

It should be noted that step 501b and step 501c may be separately performed, or may be performed with reference to other steps in the embodiment shown in FIG. 5. This is not specifically limited in this application. That is, step 501b and step 501c may be used as an independent embodiment, and do not depend on the other steps in the embodiment shown in FIG. 5.

It should be noted that there is no fixed execution sequence between step 501b and step 501c and step 501. Step 501 may be first performed, and then step 501b and step 501c are performed; or step 501 is first performed, and then step 501b and step 501c are performed; or step 501 and step 501b and step 501c are performed simultaneously based on a situation. This is not specifically limited in this application. If the embodiment shown in FIG. 5 further includes step 501a, step 501b and step 501c may be performed before step 501a.

502: The second apparatus sends first information to the first apparatus, where the first information indicates the target-level public model. Correspondingly, the first apparatus receives the first information from the second apparatus.

Specifically, the first information includes a model structure and/or a model parameter of the target-level public model.

In this embodiment of this application, the first apparatus sends the first request to the second apparatus, where the first request includes the identifier of the target-level public model, and the first request is used to request the target-level public model. Then, the first apparatus receives the first information from the second apparatus, where the first information indicates the target-level public model. In this way, the second apparatus deploys an appropriate model for the first apparatus, and the first apparatus executes the first task based on the target-level public model.

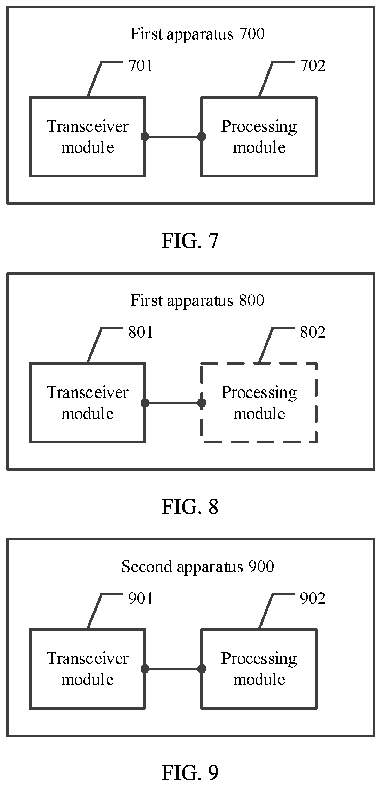

The following is a diagram of a structure of a first apparatus according to an embodiment of this application. Refer to FIG. 7. The first apparatus may be configured to perform a process performed by the first apparatus in the embodiment shown in FIG. 4. For details, refer to related descriptions in the foregoing method embodiments.

The first apparatus 700 includes a transceiver module 701 and a processing module 702.

The processing module 702 is configured to perform data processing. The transceiver module 701 may implement a corresponding communication function. The transceiver module 701 may also be referred to as a communication interface or a communication module.

Optionally, the first apparatus 700 may further include a storage module. The storage module may be configured to store instructions and/or data. The processing module 702 may read the instructions and/or data in the storage module, so that the first apparatus implements the foregoing method embodiments.

The first apparatus 700 may be configured to perform an action performed by the first apparatus in the foregoing method embodiments. The first apparatus 700 may be a first apparatus or a component that may be configured in the first apparatus. The processing module 702 is configured to perform a processing-related operation on a first apparatus side in the foregoing method embodiments. The transceiver module 701 is configured to perform a receiving-related operation on the first apparatus side in the foregoing method embodiments.

Optionally, the transceiver module 701 may include a sending module and a receiving module. The sending module is configured to perform a sending operation in the foregoing method embodiments. The receiving module is configured to perform a receiving operation in the foregoing method embodiments.

It should be noted that the first apparatus 700 may include the sending module, but does not include the receiving module. Alternatively, the first apparatus 700 may include the receiving module, but does not include the sending module. This may be specifically determined whether the foregoing solution performed by the first apparatus 700 includes the sending action and the receiving action.

Optionally, the first apparatus 700 is configured to perform an action performed by the first apparatus in the embodiment shown in FIG. 4. For details, refer to related descriptions in the embodiment shown in FIG. 4. Details are not described herein.

For example, the first apparatus 700 is configured to perform the following solution.

The transceiver module 701 is configured to receive first information from a second apparatus, where the first information indicates information about a public model of a level related to a first task.

The processing module 702 is configured to generate a user-level model based on the first information, where the user-level model is used by the first apparatus 700 to execute the first task.

It should be understood that a specific process in which the modules perform the foregoing corresponding processes has been described in detail in the foregoing method embodiments. For brevity, details are not described herein again.

The processing module 702 in the foregoing embodiment may be implemented by at least one processor or a processor-related circuit. The transceiver module 701 may be implemented by a transceiver or a transceiver-related circuit. The transceiver module 701 may also be referred to as a communication module or a communication interface. The storage module may be implemented by at least one memory.

FIG. 8 is a diagram of another structure of a first apparatus according to an embodiment of this application. Refer to FIG. 8, the first apparatus may be configured to perform processes performed by the first apparatus in the embodiments shown in FIG. 4 and FIG. 5. For details, refer to related descriptions in the foregoing method embodiments.

The first apparatus 800 includes a transceiver module 801. Optionally, the first apparatus 800 further includes a processing module 802.

The processing module 802 is configured to perform data processing. The transceiver module 801 may implement a corresponding communication function. The transceiver module 801 may also be referred to as a communication interface or a communication module.

Optionally, the first apparatus 800 may further include a storage module. The storage module may be configured to store instructions and/or data. The processing module 802 may read the instructions and/or data in the storage module, so that the first apparatus implements the foregoing method embodiments.

The first apparatus 800 may be configured to perform an action performed by the first apparatus in the foregoing method embodiments. The first apparatus 800 may be a first apparatus or a component that may be configured in the first apparatus. The processing module 802 is configured to perform a processing-related operation on a first apparatus side in the foregoing method embodiments. The transceiver module 801 is configured to perform a receiving-related operation on the first apparatus side in the foregoing method embodiments.

Optionally, the transceiver module 801 may include a sending module and a receiving module. The sending module is configured to perform a sending operation in the foregoing method embodiments. The receiving module is configured to perform a receiving operation in the foregoing method embodiments.

It should be noted that the first apparatus 800 may include the sending module, but does not include the receiving module. Alternatively, the first apparatus 800 may include the receiving module, but does not include the sending module. This may be specifically determined whether the foregoing solution performed by the first apparatus 800 includes the sending action and the receiving action.

Optionally, the first apparatus 800 is configured to perform actions performed by the first apparatus in the embodiments shown in FIG. 4 and FIG. 5. For details, refer to related descriptions in the embodiments shown in FIG. 4 and FIG. 5. Details are not described herein.

For example, the first apparatus 800 is configured to perform the following solution.

The transceiver module 801 is configured to: send feature information to a second apparatus, where the feature information represents a feature of a first task; and receive first information from the second apparatus, where the first information indicates a user-level model, the user-level model is determined based on the feature information and a public model of each level that is in the second apparatus and that is related to the first task, and the user-level model is used by the first apparatus 800 to execute the first task.

For another example, the first apparatus 800 is configured to execute the following solution.

The transceiver module 801 is configured to: send a first request to a second apparatus, where the first request is used to request a target-level public model; and receive first information from the second apparatus, where the first information indicates the target-level public model.

It should be understood that a specific process in which the modules perform the foregoing corresponding processes has been described in detail in the foregoing method embodiments. For brevity, details are not described herein again.

The processing module 802 in the foregoing embodiment may be implemented by at least one processor or a processor-related circuit. The transceiver module 801 may be implemented by a transceiver or a transceiver-related circuit. The transceiver module 801 may also be referred to as a communication module or a communication interface. The storage module may be implemented by at least one memory.

FIG. 9 is a diagram of a structure of a second apparatus according to an embodiment of this application. Refer to FIG. 9. The second apparatus 900 may be configured to perform processes performed by the second apparatus in the embodiments shown in FIG. 3 and FIG. 4. For details, refer to related descriptions in the foregoing method embodiments.

The second apparatus 900 includes a transceiver module 901 and a processing module 902.

The processing module 902 is configured to perform data processing. The transceiver module 901 may implement a corresponding communication function. The transceiver module 901 may also be referred to as a communication interface or a communication module.

Optionally, the second apparatus 900 may further include a storage module. The storage module may be configured to store instructions and/or data. The processing module 902 may read the instructions and/or the data in the storage module, so that the second apparatus implements the foregoing method embodiments.

The second apparatus 900 may be configured to perform an action performed by the second apparatus in the foregoing method embodiments. The second apparatus 900 may be a second apparatus or a component that may be configured in the second apparatus. The processing module 902 is configured to perform a processing-related operation on a second apparatus side in the foregoing method embodiments. The transceiver module 901 is configured to perform a receiving-related operation on the second apparatus side in the foregoing method embodiments.

Optionally, the transceiver module 901 may include a sending module and a receiving module. The sending module is configured to perform a sending operation in the foregoing method embodiments. The receiving module is configured to perform a receiving operation in the foregoing method embodiments.

It should be noted that the second apparatus 900 may include the sending module, but does not include the receiving module. Alternatively, the second apparatus 900 may include the receiving module, but does not include the sending module. This may be specifically determined whether the foregoing solution performed by the second apparatus 900 includes the sending action and the receiving action.

Optionally, the second apparatus 900 is configured to perform actions performed by the second apparatus in the embodiments shown in FIG. 3 and FIG. 4. For details, refer to related descriptions in the embodiments shown in FIG. 3 and FIG. 4. Details are not described herein.

For example, the second apparatus 900 is configured to perform the following solution.

The transceiver module 901 is configured to receive feature information from a first apparatus, where the feature information represents a feature of a first task.

The processing module 902 is configured to generate a user-level model based on a public model of each level that is in the second apparatus and that is related to the first task and the feature information, where the user-level model is used by the first apparatus to execute the first task.

The transceiver module 901 is further configured to send first information to the first apparatus, where the first information indicates the user-level model.

For another example, the second apparatus 900 is configured to execute the following solution.

The processing module 902 is configured to determine first information, where the first information indicates information about a public model of a level related to a first task.

The transceiver module 901 is configured to send the first information to a first apparatus, where the first information is used by the first apparatus to generate a user-level model, and the user-level model is used by the first apparatus to execute the first task.

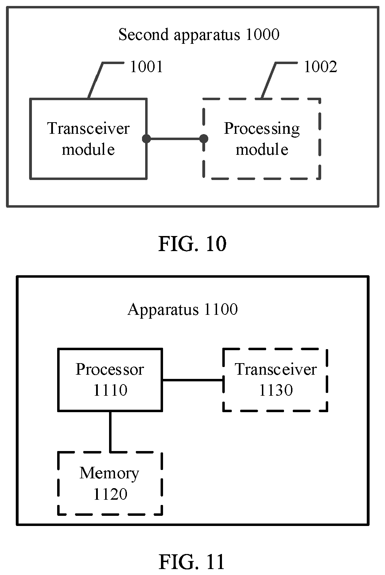

FIG. 10 is a diagram of another structure of a second apparatus according to an embodiment of this application. Refer to FIG. 10. The second apparatus 1000 may be configured to perform a process performed by the second apparatus in the embodiment shown in FIG. 5. For details, refer to related descriptions in the foregoing method embodiments.

The second apparatus 1000 includes a transceiver module 1001. Optionally, the second apparatus 1000 further includes a processing module 1002.

The processing module 1002 is configured to perform data processing. The transceiver module 1001 may implement a corresponding communication function. The transceiver module 1001 may also be referred to as a communication interface or a communication module.

Optionally, the second apparatus 1000 may further include a storage module. The storage module may be configured to store instructions and/or data. The processing module 1002 may read the instructions and/or the data in the storage module, so that the second apparatus implements the foregoing method embodiments.

The second apparatus 1000 may be configured to perform an action performed by the second apparatus in the foregoing method embodiments. The second apparatus 1000 may be a second apparatus or a component that may be configured in the second apparatus. The processing module 1002 is configured to perform a processing-related operation on a second apparatus side in the foregoing method embodiments. The transceiver module 1001 is configured to perform a receiving-related operation on the second apparatus side in the foregoing method embodiments.

Optionally, the transceiver module 1001 may include a sending module and a receiving module. The sending module is configured to perform a sending operation in the foregoing method embodiments. The receiving module is configured to perform a receiving operation in the foregoing method embodiments.

It should be noted that the second apparatus 1000 may include the sending module, but does not include the receiving module. Alternatively, the second apparatus 1000 may include the receiving module, but does not include the sending module. This may be specifically determined whether the foregoing solution performed by the second apparatus 1000 includes the sending action and the receiving action.

Optionally, the second apparatus 1000 is configured to perform an action performed by the second apparatus in the embodiment shown in FIG. 5. For details, refer to related descriptions in the embodiment shown in FIG. 5. Details are not described herein.

For example, the second apparatus 1000 is configured to perform the following solution.

The transceiver module 1001 is configured to: receive a first request from a first apparatus, where the first request is used to request a target-level public model; and send first information to the first apparatus, where the first information indicates the target-level public model.

An embodiment of this application further provides an apparatus 1100. Refer to FIG. 11. The apparatus 1100 includes a processor 1110. The processor 1110 is coupled to a memory 1120. The memory 1120 is configured to store a computer program or instructions and/or data. The processor 1110 is configured to execute the computer program or the instructions and/or the data stored in the memory 1120, so that the method in the foregoing method embodiments is performed. The apparatus 1100 is configured to implement operations performed by the first apparatus or the second apparatus in the foregoing method embodiments.

Optionally, the apparatus 1100 includes one or more processors 1110.

Optionally, as shown in FIG. 11, the apparatus 1100 may further include a memory 1120.

Optionally, the apparatus 1100 may include one or more memories 1120.

Optionally, the memory 1120 may be integrated with the processor 1110, or separately disposed.

Optionally, as shown in FIG. 11, the apparatus 1100 may further include a transceiver 1130, and the transceiver 1130 is configured to receive and/or send a signal. For example, the processor 1110 is configured to control the transceiver 1130 to receive and/or send the signal.

This application further provides an apparatus 1200. The apparatus 1200 may be a terminal device, or a processor or a chip in the terminal device. The apparatus 1200 may be configured to perform an operation performed by the first apparatus or the second apparatus in the foregoing method embodiments.

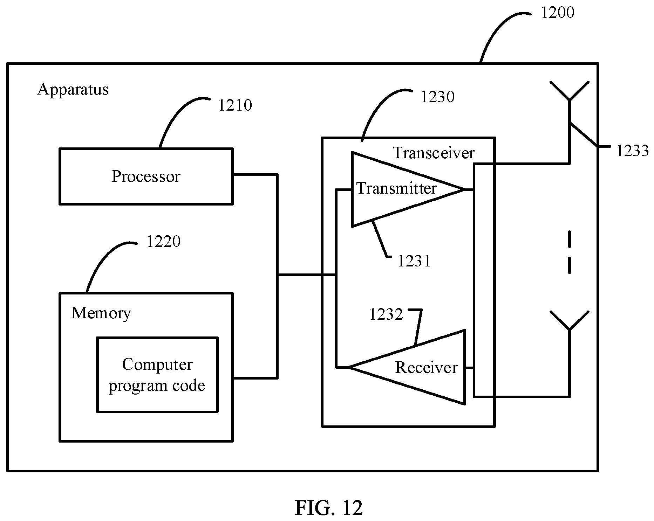

When the apparatus 1200 is the terminal device, FIG. 12 is a simplified diagram of a structure of the terminal device. As shown in FIG. 12, the terminal device includes a processor, a memory, and a transceiver. The memory may store computer program code. The transceiver includes a transmitter 1231, a receiver 1232, a radio frequency circuit (not shown in the figure), an antenna 1233, and an input/output apparatus (not shown in the figure).

The processor is mainly configured to: process a communication protocol and communication data, control the terminal device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to receive and send a radio frequency signal in a form of an electromagnetic wave.

The input/output apparatus may include a touchscreen, a display, a keyboard, or the like. The input/output apparatus is mainly configured to receive data input by a user and output data to the user. It should be noted that some types of terminal devices may have no input/output apparatus.

When needing to send data, after performing baseband processing on to-be-sent data, the processor outputs a baseband signal to the radio frequency circuit. Then, the radio frequency circuit performs radio frequency processing on the baseband signal and then sends a radio frequency signal to the outside in a form of an electromagnetic wave through the antenna. When data is sent to the terminal device, the radio frequency circuit receives the radio frequency signal through the antenna. The radio frequency circuit converts the radio frequency signal into a baseband signal, and outputs the baseband signal to the processor. The processor converts the baseband signal into data and processes the data. For ease of description, FIG. 12 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have receiving and sending functions may be considered as a transceiver module of the terminal device, and the processor that has a processing function may be considered as a processing module of the terminal device.

As shown in FIG. 12, the terminal device includes a processor 1210, a memory 1220, and a transceiver 1230. The processor 1210 may also be referred to as a processing unit, a processing board, a processing module, a processing apparatus, or the like. The transceiver 1230 may also be referred to as a transceiver unit, a transceiver, a transceiver apparatus, or the like.

Optionally, a component configured to implement a receiving function in the transceiver 1230 is considered as a receiving module, and a component configured to implement a sending function in the transceiver 1230 is considered as a sending module. That is, the transceiver 1230 includes a receiver and a transmitter. The transceiver sometimes may also be referred to as a transceiver machine, a transceiver module, a transceiver circuit, or the like. The receiver sometimes may also be referred to as a receiver machine, a receiving module, a receiver circuit, or the like. The transmitter sometimes may also be referred to as a transmitter machine, a transmitting module, a transmitter circuit, or the like.

The processor 1210 is configured to perform processing actions on a first apparatus side or a second apparatus side in the embodiments shown in FIG. 3 to FIG. 5. The transceiver 1230 is configured to perform receiving and sending actions on the first apparatus side or the second apparatus side in the embodiments shown in FIG. 3 to FIG. 5.

It should be understood that FIG. 12 is merely an example rather than a limitation, and the terminal device including the transceiver module and the processing module may not depend on the structure shown in FIG. 7, FIG. 8, or FIG. 12.

When the apparatus 1200 is a chip, the chip includes a processor, a memory, and a transceiver. The transceiver may be an input/output circuit or a communication interface. The processor may be a processing module, a microprocessor, or an integrated circuit integrated on the chip. A sending operation of the first apparatus or the second apparatus in the foregoing method embodiments may be understood as an output of the chip, and a receiving operation of the first apparatus or the second apparatus in the foregoing method embodiments may be understood as an input of the chip.

This application further provides an apparatus 1300. The apparatus 1300 may be a network device or a chip. The apparatus 1300 may be configured to perform operations performed by the first apparatus or the second apparatus in the embodiments shown in FIG. 3 to FIG. 5.

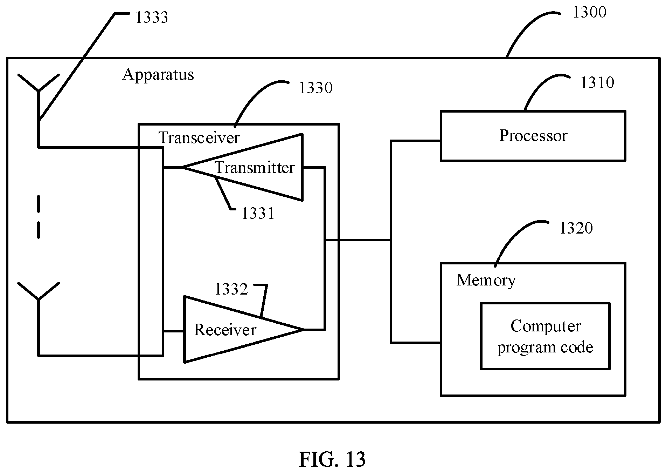

When the apparatus 1300 is a network device, for example, a base station, FIG. 13 is a simplified diagram of a structure of a base station. The base station includes a part 1310, a part 1320, and a part 1330.

The part 1310 is mainly configured to perform baseband processing, control the base station, and the like. The part 1310 is usually a control center of the base station, and may be usually referred to as a processor, and is configured to control the base station to perform a processing operation on a first apparatus side or a second apparatus side in the foregoing method embodiments.

The part 1320 is mainly configured to store computer program code and data.

The part 1330 is mainly configured to: receive and send a radio frequency signal, and perform conversion between the radio frequency signal and a baseband signal. The part 1330 may be usually referred to as a transceiver module, a transceiver, a transceiver circuit, a transceiver, or the like. The transceiver module in the part 1330 may also be referred to as a transceiver, a transceiver machine, or the like, and includes an antenna 1333 and a radio frequency circuit (not shown in the figure). The radio frequency circuit is mainly configured to perform radio frequency processing. Optionally, a component configured to implement a receiving function in the part 1330 may be considered as a receiver, and a component configured to implement a sending function may be considered as a transmitter. In other words, the part 1330 includes a receiver 1332 and a transmitter 1331. The receiver may also be referred to as a receiving module, a receiver machine, a receiving circuit, or the like. The transmitter may be referred to as a transmitting module, a transmitter machine, a transmitting circuit, or the like.

The part 1310 and the part 1320 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards may share one or more memories, or a plurality of boards may simultaneously share one or more processors.

For example, in an implementation, the transceiver module in the part 1330 is configured to perform receiving and sending-related processes performed by the first apparatus or the second apparatus in the embodiments shown in FIG. 3 to FIG. 5. The processor in the part 1310 is configured to perform a processing-related process performed by the first apparatus or the second apparatus in the embodiments shown in FIG. 3 to FIG. 5.

It should be understood that FIG. 13 is merely an example rather than a limitation. The network device including the processor, the memory, and the transceiver may not depend on the structure shown in FIG. 9, FIG. 10, or FIG. 13.

When the apparatus 1300 is a chip, the chip includes a transceiver, a memory, and a processor. The transceiver may be an input/output circuit or a communication interface. The processor is a processor, a microprocessor, or an integrated circuit integrated on the chip. A sending operation of the first apparatus or the second apparatus in the foregoing method embodiments may be understood as an output of the chip, and a receiving operation of the first apparatus or the second apparatus in the foregoing method embodiments may be understood as an input of the chip.

An embodiment of this application further provides a computer-readable storage medium. The computer-readable storage medium stores computer instructions for implementing the method performed by the first apparatus or the second apparatus in the foregoing method embodiments.

For example, when a computer program is executed by a computer, the computer is enabled to implement the method performed by the first apparatus or the second apparatus in the foregoing method embodiments.

An embodiment of this application further provides a computer program product including instructions. When the instructions are executed by a computer, the computer is enabled to implement the method performed by the first apparatus or the second apparatus in the foregoing method embodiments.

An embodiment of this application further provides a communication system. The communication system includes the first apparatus in the foregoing embodiments and the second apparatus in the foregoing embodiments.

The first apparatus is configured to perform some or all operations performed by the first apparatus in the foregoing method embodiments, and the second apparatus is configured to perform some or all operations of the second apparatus in the foregoing method embodiments.

An embodiment of this application further provides a chip apparatus. The chip apparatus includes a processor, configured to invoke a computer program or computer instructions stored in a memory, so that the processor performs the method provided in the embodiments shown in FIG. 3 to FIG. 5.

In a possible implementation, an input of the chip apparatus corresponds to a receiving operation in any one of the embodiments shown in FIG. 3 to FIG. 5, and an output of the chip apparatus corresponds to a sending operation in any one of the embodiments shown in FIG. 3 to FIG. 5.

Optionally, the processor is coupled to the memory through an interface.

Optionally, the chip apparatus further includes the memory, and the memory stores the computer program or the computer instructions.

The processor mentioned in any one of the foregoing descriptions may be a general-purpose central processing unit, a microprocessor, an application-specific integrated circuit (application-specific integrated circuit, ASIC), or one or more integrated circuits configured to control execution of a program of the method provided in any one of the embodiments shown in FIG. 3 to FIG. 5. The memory mentioned in any of the foregoing descriptions may be a read-only memory (read-only memory, ROM), another type of static storage device that can store static information and instructions, a random access memory (random access memory, RAM), or the like.

It may be clearly understood by persons skilled in the art that for convenience and brevity of description, for explanations and beneficial effect of related content in any apparatus provided above, refer to the foregoing corresponding method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in this application essentially, the part contributing, or all or some of the technical solutions may be implemented in a form of a software product. The computer software product is stored in a storage medium, and includes several instructions for instructing a computer device (which may be a personal computer, a server, or a network device) to perform all or some of the steps of the methods in embodiments of this application. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A model indication method, wherein the method comprises:

   sending, by a first apparatus, feature information to a second apparatus, wherein the feature information represents a feature of a first task; and
   receiving, by the first apparatus, first information from the second apparatus, wherein the first information indicates a user-level model, the user-level model is determined based on the feature information and a public model of each level that is in the second apparatus and that is related to the first task, and the user-level model is used by the first apparatus to execute the first task.

2. The method according to claim 1, wherein the method further comprises:
determining, by the first apparatus, the feature information based on task information of the first task; or determining, by the first apparatus, the feature information based on task information of the first task and auxiliary information of the first apparatus.

3. The method according to claim 2, wherein the feature information comprises a feature vector, and determining, by the first apparatus, the feature information based on the task information of the first task comprises:

inputting, by the first apparatus, the task information into a feature vector generation model, to obtain the feature vector output by the feature vector generation model; and
determining, by the first apparatus, the feature information based on the task information of the first task and the auxiliary information of the first apparatus comprises:
inputting, by the first apparatus, the task information and the auxiliary information into the feature vector generation model, to obtain the feature vector output by the feature vector generation model.

4. The method according to claim 3, wherein before obtaining the feature vector output by the feature vector generation model, the method further comprises:
receiving, by the first apparatus, second information from the second apparatus, wherein the second information indicates the feature vector generation model.

5. A model indication method, wherein the method comprises:

receiving, by a second apparatus, feature information from a first apparatus, wherein the feature information represents a feature of a first task;
generating, by the second apparatus, a user-level model based on a public model of each level that is in the second apparatus and that is related to the first task and the feature information, wherein the user-level model is used by the first apparatus to execute the first task; and
sending, by the second apparatus, first information to the first apparatus, wherein the first information indicates the user-level model.

6. The method according to claim 5, wherein the feature information comprises a feature vector, and generating, by the second apparatus, the user-level model based on the public model of each level related to the first task and the feature information comprises:

correlating, by the second apparatus, the feature vector with a feature vector corresponding to the public model of each level that is in the second apparatus and that is related to the first task, to obtain a correlation coefficient of public model of each level related to the first task; and
performing, by the second apparatus based on the correlation coefficient of the public model of each level related to the first task, weighting and fusion processing on the public model of each level related to the first task, to obtain the user-level model.

7. The method according to claim 5 or 6, wherein the feature information comprises the feature vector, and the method further comprises:
sending, by the second apparatus, second information to the first apparatus, wherein the second information indicates a feature vector generation model, and the feature vector generation model is used to generate the feature vector.

8. The method according to claim 3, 4, 6, or 7, wherein the feature vector is a vector comprising a bit sequence.

9. The method according to any one of claims 5 to 8, wherein the feature information is generated based on task information of the first task, or the feature information is generated based on task information of the first task and auxiliary information of the first apparatus.

10. The method according to claim 2 or 9, wherein the auxiliary information comprises at least one of the following: capability information, location information, a statistical parameter, or an environment parameter of the first apparatus.

11. The method according to any one of claims 2 to 4, 9, and 10, wherein the task information comprises at least one of the following: a task type or target performance of the first task.

12. The method according to claim 11, wherein the task type comprises any one of the following: channel state information CSI compression, beam prediction, mobility management, data encryption, a transceiver link, or model training.

13. The method according to any one of claims 1 to 12, wherein the public model of each level related to the first task comprise at least one of the following: a first-level public model or a second-level public model that is related to the first task.

14. The method according to claim 13, wherein the first-level public model, the second-level public model, and the user-level model are classified based on a size of an execution area corresponding to the first task.

15. The method according to claim 14, wherein the first-level public model is a global public model related to the first task, and the second-level public model is a cell-level public model related to the first task, a sector-level public model related to the first task, a cell-level public model that is related to the first task and that is adapted to terminal devices of different capability levels, or a sector-level public model that is related to the first task and that is adapted to terminal devices of different capability levels.

16. The method according to claim 13, wherein the first-level public model, the second-level public model, and the user-level model are classified based on a primary-secondary relationship between tasks that the models are used to execute.

17. The method according to any one of claims 5 to 16, wherein the method further comprises:

sending, by a third apparatus, third information to the second apparatus, wherein the third information indicates the first-level public model; and correspondingly receiving, by the second apparatus, the third information from the third apparatus; and
adjusting, by the second apparatus, the first-level public model, to obtain the second-level public model.

18. A model generation method, wherein the method comprises:

receiving, by a first apparatus, first information from a second apparatus, wherein the first information indicates information about a public model of a level related to a first task; and
generating, by the first apparatus, a user-level model based on the first information, wherein the user-level model is used by the first apparatus to execute the first task.

19. The method according to claim 18, wherein the first information comprises at least one of the following: reference information or adjustment information, the reference information indicates related information of the public model of a level that is referenced by the first apparatus for generating the user-level model, and the adjustment information indicates related information for adjusting the public model of a level.

20. The method according to claim 19, wherein the reference information comprises at least one of the following: area information, task information of the first task, first indication information, or second indication information, the area information indicates an area in which the public model of a level reused by the first apparatus takes effect, the first indication information indicates the public model of a level, and the second indication information indicates a reuse manner of the public model of a level.

21. The method according to claim 19 or 20, wherein the adjustment information comprises at least one of the following: adjustment information of a model parameter of the public model of a level, adjustment information of a model structure of the public model of a level, or adjustment information of quantization precision of a model parameter of the public model of a level.

22. The method according to claim 21, wherein the method further comprises:

generating, by the first apparatus, a first feature vector, wherein the first feature vector represents a feature of the first task; and
correlating, by the first apparatus, the first feature vector with a second feature vector, to obtain a correlation coefficient between the first feature vector and the second feature vector, wherein the second feature vector represents a feature of the public model of a level; and

generating, by the first apparatus, the user-level model based on the first information comprises:

when the correlation coefficient between the first feature vector and the second feature vector falls within a threshold range of the correlation coefficient, generating, by the first apparatus, the user-level model based on the first information and third indication information, wherein the third indication information indicates the reuse manner of the public model of a level.

23. The method according to claim 22, wherein the first information further comprises at least one of the following: the threshold range of the correlation coefficient or the third indication information; or

before generating, by the first apparatus, the user-level model based on the first information, the method further comprises:

receiving, by the first apparatus, second information from the second apparatus, wherein the second information comprises at least one of the following: the threshold range of the correlation coefficient or the third indication information.

24. The method according to claim 22 or 23, wherein generating, by the first apparatus, the first feature vector comprises:

generating, by the first apparatus, the first feature vector based on the task information of the first task; or generating, by the first apparatus, the first feature vector based on the task information and auxiliary information.

25. The method according to claim 24, wherein the auxiliary information comprises at least one of the following: capability information, location information, a statistical parameter, or an environment parameter of the first apparatus.

26. The method according to any one of claims 22 to 25, wherein the method further comprises:

receiving, by the first apparatus, the second feature vector from the second apparatus.

27. The method according to claim 26, wherein the first feature vector is a vector comprising a bit sequence.

28. A model generation method, wherein the method comprises:

determining, by a second apparatus, first information, wherein the first information indicates information about a public model of a level related to a first task; and

sending, by the second apparatus, the first information to the first apparatus, wherein the first information is used by the first apparatus to generate a user-level model, and the user-level model is used to execute the first task.

29. The method according to claim 28, wherein the first information comprises at least one of the following: reference information or adjustment information, the reference information indicates related information of the public model of a level that is referenced by the first apparatus for generating the user-level model, and the adjustment information indicates related information for adjusting the public model of a level.

30. The method according to claim 29, wherein the reference information comprises at least one of the following: area information, task information of the first task, first indication information, or second indication information, the area information indicates an area in which the public model of a level reused by the first apparatus takes effect, the first indication information indicates the public model of a level, and the second indication information indicates a reuse manner of the public model of a level.

31. The method according to claim 29 or 30, wherein the adjustment information comprises at least one of the following: adjustment information of a model parameter of the public model of a level, adjustment information of a model structure of the public model of a level, or adjustment information of quantization precision of a model parameter of the public model of a level.

32. The method according to claim 28, wherein the first information comprises at least one of the following: a threshold range of a correlation coefficient or third indication information, and the third indication information indicates a reuse manner of the public model of a level; or

the method further comprises:

sending, by the second apparatus, second information to the first apparatus, wherein the second information comprises at least one of the following: the threshold range of the correlation coefficient or the third indication information.

33. The method according to claim 28 or 32, wherein the method further comprises:
sending, by the second apparatus, a second feature vector to the first apparatus, wherein the second feature vector represents a feature of the public model of a level.

34. The method according to any one of claims 22 to 25, 32, and 33, wherein the first information is carried in a system message or a user-specific message.

35. The method according to any one of claims 22 to 25, 32, 33, and 34, wherein the first information comprises a model parameter of the public model of a level and/or a model structure of the public model of a level.

36. The method according to any one of claims 20 to 27 and 30 to 35, wherein the reuse manner comprises any one of the following: using the public model of a level as the user-level model, using the model structure of the public model of a level as a model structure of the user-level model, using the model parameter of the public model of a level as a model parameter of the user-level model, or using the public model of a level as a teacher Teacher to train the user-level model.

37. The method according to any one of claims 18 to 36, wherein the public model of a level related to the first task comprises a first-level public model or a second-level public model that is related to the first task.

38. The method according to claim 37, wherein the first-level public model, the second-level public model, and the user-level model are classified based on a size of an execution area corresponding to the first task.

39. The method according to claim 38, wherein the first-level public model is a global public model related to the first task, and the second-level public model is a cell-level public model related to the first task, a sector-level public model related to the first task, a cell-level public model that is related to the first task and that is adapted to terminal devices of different capability levels, or a sector-level public model that is related to the first task and that is adapted to terminal devices of different capability levels.

40. The method according to claim 37, wherein the first-level public model, the second-level public model, and the user-level model are classified based on a primary-secondary relationship between tasks that the models are used to execute.

41. The method according to any one of claims 37 to 40, wherein the public model of a level related to the first task comprises the second-level public model, and the method further comprises:

sending, by a third apparatus, third information to the second apparatus, wherein the third information indicates the first-level public model; and correspondingly receiving, by the second apparatus, the third information from the third apparatus; and
adjusting, by the second apparatus, the first-level public model, to obtain the second-level public model.

42. A model indication method, wherein the method comprises:

sending, by a first apparatus, a first request to a second apparatus, wherein the first request is used to request a target-level public model; and
receiving, by the first apparatus, first information from the second apparatus, wherein the first information indicates the target-level public model.

43. The method according to claim 42, wherein the method further comprises:
receiving, by the first apparatus, level public model library information from the second apparatus, wherein the level public model library information comprises an identifier of a public model of at least one level, and the public model of at least one level comprises the target-level public model.

44. A model indication method, wherein the method comprises:

receiving, by a second apparatus, a first request from a first apparatus, wherein the first request is used to request the target-level public model; and
sending, by the second apparatus, first information to the first apparatus, wherein the first information indicates the target-level public model.

45. The method according to claim 44, wherein the method further comprises:
sending, by the second apparatus, level public model library information to the first apparatus, wherein the level public model library information comprises an identifier of a public model of at least one level, and the public model of at least one level comprises the target-level public model.

46. The method according to claim 43 or 45, wherein the level public model library information further comprises a performance indicator of the public model of at least one level.

47. The method according to any one of claims 42 to 46, wherein the first request comprises an identifier of the target-level public model.

48. The method according to claim 47, wherein the identifier of the target-level public model comprises at least one of the following: a model provider identifier, a service identifier, an area identifier, or an index of the target-level public model in an area indicated by the area identifier, the model provider identifier indicates a provider of the target-level public model, the service identifier indicates a first task, the target-level public model is used to execute the first task, and the area identifier indicates an area in which the target-level public model takes effect.

49. The method according to any one of claims 42 to 48, wherein the first request further comprises task information of the first task, and the target-level public model is used by the first apparatus to execute the first task.

50. The method according to any one of claims 42 to 49, wherein the target-level public model is a first-level public model or a second-level public model.

51. The method according to claim 50, wherein the first-level public model and the second-level public model are classified based on a size of an execution area corresponding to the first task.

52. The method according to claim 51, wherein the first-level public model is a global public model, and the second-level public model is a cell-level public model, a sector-level public model, a cell-level public model adapted to terminal devices of different capability levels, or a sector-level public model adapted to terminal devices of different capability levels.

53. The method according to claim 50, wherein the first-level public model and the second-level public model are classified based on a primary-secondary relationship between tasks that the models are used to execute.

54. The method according to any one of claims 42 to 53, wherein the target-level public model is the second-level public model, and the method further comprises:

sending, by a third apparatus, second information to the second apparatus, wherein the second information indicates the first-level public model; and correspondingly receiving, by the second apparatus, the second information from the third apparatus; and
adjusting, by the second apparatus, the first-level public model, to obtain the second-level public model.

55. A first apparatus, wherein the first apparatus comprises a transceiver module; and
the transceiver module is configured to perform receiving and sending operations in the method according to any one of claims 1 to 4 and 8 to 16, or the transceiver module is configured to perform receiving and sending operations in the method according to any one of claims 42, 43, and 46 to 53.

56. The first apparatus according to claim 55, wherein the first apparatus further comprises a processing module; and

when the transceiver module is configured to perform the receiving and sending operations in the method according to any one of claims 1 to 4 and 8 to 16, the processing module is configured to perform a processing operation in the method according to any one of claims 1 to 4 and 8 to 16; or
when the transceiver module is configured to perform the receiving and sending operations in the method according to any one of claims 42, 43, and 46 to 53, the processing module is configured to perform a processing operation in the method according to any one of claims 42, 43, and 46 to 53.

57. A first apparatus, wherein the first apparatus comprises a transceiver module and a processing module, the transceiver module is configured to perform receiving and sending operations in the method according to any one of claims 18 to 27 and 34 to 41, and the processing module is configured to perform a processing operation in the method according to any one of claims 18 to 27 and 34 to 41.

58. A second apparatus, wherein the second apparatus comprises a transceiver module and a processing module; and

the transceiver module is configured to perform receiving and sending operations in the method according to any one of claims 5 to 17, and the processing module is configured to perform a processing operation in the method according to any one of claims 5 to 17; or
the transceiver module is configured to perform receiving and sending operations in the method according to any one of claims 28 to 41, and the processing module is configured to perform a processing operation in the method according to any one of claims 28 to 41.

59. A second apparatus, wherein the second apparatus comprises a transceiver module, and the transceiver module is configured to perform receiving and sending operations in the method according to any one of claims 44 to 54.

60. The second apparatus according to claim 58, wherein the second apparatus comprises a processing module, and the processing module is configured to perform a processing operation in the method according to any one of claims 44 to 54.

61. An apparatus, wherein the apparatus comprises a processor, and the processor is configured to execute a computer program or computer instructions in a memory, to perform the method according to any one of claims 1 to 54.

62. A computer-readable storage medium, wherein the computer-readable storage medium stores a computer program; and when the computer program is executed by an apparatus, the apparatus performs the method according to any one of claims 1 to 54.

63. A communication system, wherein the communication system comprises a first apparatus and a second apparatus; and
the first apparatus is configured to perform the method according to any one of claims 1 to 4, 8 to 16, 18 to 27, 34 to 41, 42, 43, and 46 to 53; and the second apparatus is configured to perform the method according to any one of claims 5 to 17, 28 to 41, and 44 to 54.

FIG. 1

FIG. 2A

**FIG. 2B**

FIG. 2C

| First apparatus | Second apparatus | Third apparatus |
|---|---|---|

301c: Third information (indicating a first-level public model)

301d: Adjust the first-level public model, to obtain a second-level public model

301b: Second information (indicating a feature vector generation model)

301a: Determine feature information based on task information of a first task and/or auxiliary information of the first apparatus

301: Feature information

302: Generate a user-level model based on a public model of each level that is in the second apparatus and that is related to the first task and the feature information

303: First information (indicating the user-level model)

FIG. 3

First
apparatus

Second
apparatus

Third
apparatus

401c: Third information
(indicating a first-level
public model)

401d: Adjust the first-level public
model, to obtain a second-level
public model

401b: Second feature vector

401a: Generate a first feature vector

401: First information

402: Generate a user-level model
based on the first information

FIG. 4

| First apparatus | Second apparatus | Third apparatus |
|---|---|---|

501b: Second information (indicating a first-level public model)

501c: Adjust the first-level public model, to obtain a second-level public model

501a: Level public model library information

501: First request (used to request a target-level public model)

502: First information (indicating the target-level public model)

FIG. 5

EP 4 773 653 A1

| Identifier of a target-level public model | | | | | |
|---|---|---|---|---|---|
| Model provider identifier (Provider ID) | Service identifier (Service ID) | First-level area identifier (1$^{st}$ Area ID) | Second-level area identifier (2$^{nd}$ Area ID) | Third-level area identifier (3$^{rd}$ Area ID) | Index (index) of the target-level public model |

Area identifier

FIG. 6

First apparatus 700

701 Transceiver module

702 Processing module

**FIG. 7**

First apparatus 800

801 Transceiver module

802 Processing module

**FIG. 8**

Second apparatus 900

901 Transceiver module

902 Processing module

**FIG. 9**

Second apparatus 1000

1001       1002

| Transceiver module | | Processing module |

FIG. 10

Apparatus 1100

| Processor 1110 | | Transceiver 1130 |

Memory 1120

FIG. 11

FIG. 12

FIG. 13

# EP 4 773 653 A1

## INTERNATIONAL SEARCH REPORT

| | International application No. |
|---|---|
| | **PCT/CN2023/117533** |

### A. CLASSIFICATION OF SUBJECT MATTER

H04W 24/02(2009.01)i

According to International Patent Classification (IPC) or to both national classification and IPC

### B. FIELDS SEARCHED

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

DWPI, CNTXT, ENTXTC, ENTXT, CNKI: 任务, 性能, 模型, 公共, 通用, 用户级, 核心网, 小区级, 生成, 训练, task, performance, model, common, general, core, network, generate, train

### C. DOCUMENTS CONSIDERED TO BE RELEVANT

| Category* | Citation of document, with indication, where appropriate, of the relevant passages | Relevant to claim No. |
|---|---|---|
| X | CN 116502079 A (BEIJING UNIVERSITY OF POSTS AND TELECOMMUNICATIONS) 28 July 2023 (2023-07-28) description, paragraphs [0045]-[0061] | 1-63 |
| A | CN 111083710 A (DATANG NETWORK CO., LTD.) 28 April 2020 (2020-04-28) entire document | 1-63 |
| A | CN 115424085 A (HUAWEI TECHNOLOGIES CO., LTD.) 02 December 2022 (2022-12-02) entire document | 1-63 |
| A | CN 112163017 A (GUANGZHOU TELIGEN COMMUNICATION TECHNOLOGY CO., LTD.) 01 January 2021 (2021-01-01) entire document | 1-63 |
| A | WO 2023082207 A1 (LENOVO (BEIJING) LIMITED) 19 May 2023 (2023-05-19) entire document | 1-63 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 May 2024** | **15 May 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/117533**

| Patent document cited in search report | | | Publication date (day/month/year) | Patent family member(s) | | | Publication date (day/month/year) |
|---|---|---|---|---|---|---|---|
| CN | 116502079 | A | 28 July 2023 | WO | 2023138232 | A1 | 27 July 2023 |
| CN | 111083710 | A | 28 April 2020 | None | | | |
| CN | 115424085 | A | 02 December 2022 | None | | | |
| CN | 112163017 | A | 01 January 2021 | None | | | |
| WO | 2023082207 | A1 | 19 May 2023 | None | | | |

Form PCT/ISA/210 (patent family annex) (July 2022)